Europäisches Patentamt

European Patent Office

Office européen des brevets

(11) Veröffentlichungsnummer: **0 545 969 B1**

(12) **EUROPÄISCHE PATENTSCHRIFT**

(45) Veröffentlichungstag der Patentschrift: **14.12.94**

(51) Int. Cl.5: **C08G 18/48**, C08G 18/67, C08G 18/81

(21) Anmeldenummer: **91914598.7**

(22) Anmeldetag: **08.08.91**

(86) Internationale Anmeldenummer: **PCT/EP91/01501**

(87) Internationale Veröffentlichungsnummer: **WO 92/04391 (19.03.92 92/07)**

Die Akte enthält technische Angaben, die nach dem Eingang der Anmeldung eingereicht wurden und die nicht in dieser Patentschrift enthalten sind.

(54) **FLÜSSIGE, STRAHLENHÄRTBARE ÜBERZUGSMASSE FÜR DIE BESCHICHTUNG VON GLASOBERFLÄCHEN.**

(30) Priorität: **01.09.90 DE 4027770**

(43) Veröffentlichungstag der Anmeldung:
**16.06.93 Patentblatt  93/24**

(45) Bekanntmachung des Hinweises auf die Patenterteilung:
**14.12.94 Patentblatt  94/50**

(84) Benannte Vertragsstaaten:
**AT BE CH DE DK ES FR GB IT LI NL SE**

(56) Entgegenhaltungen:
EP-A- 0 207 257          EP-A- 0 209 641
EP-A- 0 223 086          EP-A- 0 228 854
EP-A- 0 323 546          US-A- 4 131 602

(73) Patentinhaber: **BASF Lacke + Farben AG**
**Glasuritstrasse 1**
**D-48165 Münster-Hiltrup (DE)**

(72) Erfinder: **HINTZE-BRÜNING, Horst, Dr**
**Karl-Immermann-Str. 32**
**D-4400 Münster (DE)**
Erfinder: **SCHUNCK, Stephan, Dr**
**Auf dem Plätchen 6**
**W-8900 Augsburg (DE)**

(74) Vertreter: **Münch, Volker, Dr.**
**BASF Lacke + Farben AG**
**Patente/Lizenzen/Dokumentation**
**Postfach 61 23**
**D-48136 Münster (DE)**

**Beschreibung**

Gegenstand der vorliegenden Erfindung sind strahlenhärtbare Oligomere mit mehreren ethylenisch ungesättigten Endgruppen und mehreren Urethan- und/oder Harnstoffgruppen pro Molekül, die herstellbar sind aus

a) mindestens einer hydroxi- und/oder aminofunktionellen Verbindung mit einer Funktionalität zwischen 3 und 4 und mit einem zahlenmittleren Molekulargewicht von mehr als 750 bis 4000, wobei Polyesterpolyole ausgenommen sind,

b) mindestens einer Verbindung mit 2 Hydroxyl- und/oder Aminogruppen pro Molekül und mit einem zahlenmittleren Molekulargewicht zwischen 200 und 4000, wobei Polyesterdiole ausgenommen sind,

c) mindestens einer monoethylenisch ungesättigten Verbindung mit einer Gruppe mit einem aktiven Wasserstoffatom pro Molekül und mit einem zahlenmittleren Molekulargewicht zwischen 116 und 1000 und

d) mindestens einem aliphatischen und/oder cycloaliphatischen Diisocyanat.

Gegenstand der vorliegenden Erfindung sind außerdem strahlenhärtbare Überzugsmassen, die diese strahlenhärtbaren Oligomere enthalten, sowie Verfahren zum Beschichten von Glasoberflächen, insbesondere optische Glasfasern, bei denen diese Überzugsmassen eingesetzt werden.

Optische Glasfasern haben eine ständig wachsende Bedeutung auf dem Gebiet der Kommunikation als Lichtwellenleiterfasern erlangt. Für diesen Anwendungszweck ist es unbedingt erforderlich, die Glasoberfläche vor Feuchtigkeit und Abnutzungserscheinungen zu schützen. Die Glasfasern werden daher direkt im Anschluß an ihre Herstellung mit mindestens einer schützenden Lackschicht versehen.

So ist es beispielsweise aus der EP-B-114 982 bekannt, Glasfasern zunächst mit einer elastischen, aber wenig harten und wenig zähen Pufferschicht (Grundierung) zu versehen und danach einen strahlenhärtbaren Decklack zu applizieren, der eine hohe Härte und Zähigkeit aufweist. Der zweischichtige Aufbau soll einen guten Schutz der Glasfasern bei mechanischer Beanspruchung auch bei tiefen Temperaturen gewährleisten.

Als Grundierung werden gemäß EP-B-114 982 strahlenhärtbare Beschichtungsmittel auf der Basis von linearen Urethanacrylaten eingesetzt. Als Decklack können strahlenhärtbare Überzugsmittel auf der Basis eines linearen Urethanacrylates, eines diethylenisch ungesättigten Esters, eines Diglycidylethers eines Bisphenols und eines monoethylenisch ungesättigten Monomers, wobei die Glasübergangstemperatur des aus diesem Monomer hergestellten Homopolymers oberhalb 55 °C liegt, eingesetzt werden.

Weiterhin sind auch aus der EP-A-223 086 strahlenhärtbare Überzugsmittel für die Beschichtung von optischen Glasfasern bekannt. Diese Überzugsmittel enthalten als Bindemittel strahlenhärtbare Oligomere gemäß Oberbegriff des Hauptanspruchs.

Diese in der EP-A-223 086 beschriebenen strahlenhärtbaren Überzugsmittel werden entweder als Decklack oder als Einschichtlackierung eingesetzt. Als Grundierung sind sie dagegen aufgrund eines zu hohen E-Modul-Wertes der ausgehärteten Beschichtungen nicht geeignet.

Strahlenhärtbare Überzugsmassen für die Beschichtung von optischen Glasfasern sind auch in der EP-A-209 641 beschrieben. Diese Überzugsmassen enthalten als Bindemittel ein Polyurethanoligomer mit Acrylatendgruppen, das auf einem polyfunktionellen Kern basiert. Diese Überzugsmassen können sowohl als Grundierung als auch als Decklack eingesetzt werden. Auch eine einschichtige Verarbeitung ist möglich.

Weiterhin sind aus der US-A-4,131,602 strahlenhärtbare Überzugsmassen bekannt, die strahlenhärtbare Urethanacrylat-Oligomere enthalten, welche entweder durch Umsetzung eines Diisocyanates mit einem Polyestertri- bzw. -tetraol und einem Polyetherdiol oder durch Umsetzung eines Diisocyanates mit einem Polyethertri- bzw. -tetraol und einem Polyesterdiol und anschließender Addition von Hydroxiethylacrylat hergestellt werden. Die Verwendung der Überzugsmassen für die Beschichtung von optischen Glasfasern ist allerdings in der US-A-4,131,602 nicht beschrieben.

Ferner sind aus der EP-A-228 854 strahlenhärtbare Überzugsmassen bekannt, die eine Mischung aus einem linearen und einem verzweigten Urethanacrylat-Oligomer enthalten. Das verzweigte Urethanacrylat-Oligomer wird hergestellt durch Umsetzung eines Diisocyanates mit einem Polyethertriol mit einem Molekulargewicht von 300 bis 750 und Hydroxialkylacrylat. Die Verwendung der Überzugsmassen für die Beschichtung von optischen Glasfasern ist in der FP-A-228 854 nicht beschrieben.

Aus der EP-A-323 546 sind Pufferbeschichtungszusammensetzungen für die Beschichtung von Glasfasern bekannt, die im wesentlichen lineare, strahlenhärtbare Urethanacrylat-Oligomere enthalten, welche durch Umsetzung eines Diisocyanates mit dem Reaktionsprodukt von Polyoxytetramethylenglykol und einer Dicarbonsäure mit langkettigen Seitenketten hergestellt werden.

Aus der EP-A-207 257 sind strahlenhärtbare (meth)acrylfunktionelle Polyester bekannt, die ein weitgehend lineares Grundgerüst mit Alkylseitenketten aufweisen. Diese Polyester werden insbesondere als Klebstoffe eingesetzt, während eine Verwendung in Überzugsmassen für die Beschichtung von Glasfasern nicht beschrieben ist.

Schließlich sind beispielsweise aus der EP-A-208 845, der EP-A-167 199, der EP-A-204 161, der EP-A-204 160 und EP-A-250 631 strahlenhärtbare Überzugsmassen für die Beschichtung von optischen Glasfasern bekannt, die als Bindemittel lineare Urethanacrylate enthalten.

Diese Überzugsmassen weisen den Nachteil eines unbefriedigenden Alterungsverhaltens auf. Ferner sind die mechanischen Eigenschaften der Beschichtungen, insbesondere die Elastizität, bei Langzeitbelastung noch verbesserungsbedürftig.

Der vorliegenden Erfindung liegt die Aufgabe zugrunde, strahlenhärtbare Überzugsmassen für die Beschichtung von Glasoberflächen, insbesondere von optischen Glasfasern, zur Verfügung zu stellen, die im Vergleich zu den bekannten Überzugsmassen zu Beschichtungen mit verbesserten Eigenschaften führen. Insbesondere sollten die ausgehärteten Beschichtungen ein verbessertes Alterungsverhalten und damit eine erhöhte Lagerstabilität der beschichteten Glasfaser aufweisen. Weiterhin sollten die ausgehärteten Beschichtungen ein verbessertes Verhalten bei der Absorption und Desorption von Wasser zeigen.

Dies ist insbesondere für die optische Dämpfung der beschichteten Faser von Bedeutung. Darüber hinaus sollten die ausgehärteten Beschichtungen auch bei tiefen Temperaturen eine gute Pufferwirkung aufweisen. Dies bedeutet, daß sich die mechanischen Eigenschaften der Beschichtung mit sinkender Temperatur nur möglichst wenig verschlechtern sollten. Insbesondere sollte der E-Modul-Wert mit sinkender Temperatur nur geringfügig ansteigen. Dabei sollten die Überzugsmassen möglichst schnell aushärten. Die resultierenden Beschichtungen sollten außerdem eine möglichst geringe Wasserstoffentwicklung bei der Lagerung bzw. Alterung zeigen sowie eine gute Haftung auf der Glasoberfläche aufweisen.

Die Aufgabe wird überraschenderweise durch strahlenhärtbare Oligomere mit mehreren ethylenisch ungesättigten Endgruppen und mehreren Urethan- und/oder Harnstoffgruppen pro Molekül gelöst, die herstellbar sind aus

a) mindestens einer hydroxi- und/oder aminofunktionellen Verbindung mit einer Funktionalität zwischen 3 und 4 und einem zahlenmittleren Molekulargewicht von mehr als 750 bis 4000, wobei Polyesterpolyole ausgenommen sind,

b) mindestens einer Verbindung mit 2 Hydroxyl- und/-oder Aminogruppen pro Molekül mit einem zahlenmittleren Molekulargewicht zwischen 200 und 4000, wobei Polyesterdiole ausgenommen sind,

c) mindestens einer monoethylenisch ungesättigten Verbindung mit einer Gruppe mit einem aktiven Wasserstoffatom pro Molekül und mit einem zahlen- mittleren Molekulargewicht zwischen 116 und 1000 und

d) mindestens einem aliphatischen und/oder cycloaliphatischen Diisocyanat.

Die strahlenhärtbaren Oligomere sind dadurch gekennzeichnet, daß die Komponenten a bis d in solchen Mengen eingesetzt werden, daß

1. das Molverhältnis der Komponente a zu der Komponente b zwischen 0,1 : 1 und 1,1 : 1, bevorzugt zwischen 0,1 und 0,8 liegt,

2. das Molverhältnis der Komponente c zu der Komponente a zwischen 2,0 : 1 und 10 : 1, bevorzugt zwischen 2,5 und 10 liegt und

3. das Äquivalentverhältnis der Isocyanatgruppen der Komponente d zu den Hydroxyl- und/oder Aminogruppen der Summe der Komponenten a bis c zwischen 0,9 und 1,0 liegt.

Die vorliegende Erfindung betrifft außerdem strahlenhärtbare Überzugsmassen, die diese strahlenhärtbare Oligomere enthalten, sowie Verfahren zum Beschichten von Glasoberflächen, insbesondere von optischen Glasfasern, bei denen diese Überzugsmassen eingesetzt werden.

Es ist überraschend und war nicht vorhersehbar, daß strahlenhärtbare Überzugsmassen auf der Basis der erfindungsgemäßen Oligomere zu Beschichtungen mit einem gegenüber herkömmlichen Beschichtungen verbesserten Alterungsverhalten führen, so daß mit diesen Überzugsmassen beschichtete Glasfasern eine erhöhte Langzeitstabilität aufweisen. Darüber hinaus zeigen die aus den erfindungsgemäßen Überzugsmassen hergestellten Beschichtungen ein gegenüber herkömmlichen Beschichtungen verbessertes Verhalten bei der Absorption und der Desorption von Wasser. Vorteilhaft ist außerdem die gute Pufferwirkung der Beschichtungen auch bei tiefen Temperaturen, da so das Problem der sogenannten Mikrobiegungen gelöst wird. Weiterhin zeichnen sich die erfindungsgemäßen Beschichtungen durch gute mechanische Eigenschaften, wie z.B. dem Anwendungszweck angepaßte Zugfestigkeit und Dehnung, sowie durch eine nur geringe Wasserstoffentwicklung bei der Lagerung bzw. Alterung aus. Schließlich weisen sie eine gute Haftung auf der Glasoberfläche auf.

Im folgenden werden nun zunächst die erfindungsgemäßen strahlenhärtbaren Oligomere näher erläutert: Als Komponente a zur Herstellung der Oligomere sind hydroxi- und/oder aminofunktionelle Verbindungen mit einer Funktionalität von 3 bis 4, bevorzugt 3, geeignet. Diese Verbindungen weisen zahlenmittlere

EP 0 545 969 B1

Molekulargewichte von 500 bis 4000, bevorzugt von 750 bis 2000, auf.

Beispiele für geeignete Verbindungen sind polyoxialkylierte Triole, wie z. B. ethoxilierte und propoxilierte Triole, bevorzugt ethoxilierte Triole, besonders bevorzugt mit einem zahlenmittleren Molekulargewicht größer gleich 1000. Als Triole werden beispielsweise Glycerin oder Trimethylolpropan eingesetzt.

Geeignet sind auch die entsprechenden aminofunktionellen Verbindungen, wie z. B. die aus polyalkoxilierten Triolen abgeleiteten aminofunktionellen Verbindungen. Beispiele sind die unter dem Namen JEFFAMIN[R] der Firma Texaco erhältlichen Produkte, z. B. JEFFAMIN[R], T 403, T 3000, T 5000, C 346, DU 700 und BuD 2000.

Die aminofunktionellen Verbindungen können dabei sowohl primäre als auch sekundäre Aminogruppen enthalten.

Daneben sind auch Verbindungen geeignet, die sowohl Amino- als auch Hydroxylgruppen enthalten.

Als Komponente b geeignet sind Verbindungen, die pro Molekül zwei Hydroxyl- und/oder Aminogruppen enthalten. Diese Verbindungen weisen zahlenmittlere Molekulargewichte von 200 bis 4000, bevorzugt 600 bis 2000, auf.

Beispiele für geeignete Verbindungen b sind Polyoxialkylenglykole und Polyoxialkylendiamine, wobei Alkylengruppen mit 1 bis 6 C-Atomen bevorzugt sind. So sind beispielsweise Polyoxiethylenglykole mit einem zahlenmittleren Molekulargewicht von 1000, 1500, 2000 oder 2500 sowie Polyoxipropylenglykole mit den entsprechenden Molekulargewichten und Polytetramethylenglykole geeignet. Auch polyethoxilierte und polypropoxilierte Diole können eingesetzt werden, wie z. B. die ethoxilierten bzw. propoxilierten Derivate von Butandiol, Hexandiol usw.

Selbstverständlich können als Komponente b auch die entsprechenden Diamine sowie Verbindungen mit einer OH- und einer Aminogruppe eingesetzt werden. Beispiele für geeignete Verbindungen sind die unter dem Namen JEFFAMIN® D 230, D 400, D 2000, D 4000, ED 600, ED 900, ED 2001 und ED 4000 der Firma Texaco erhältlichen Produkte.

Bevorzugt wird als Komponente b eine Mischung aus

$b_1$) 0 bis 90 Mol-% mindestens eines Polyetherdiols und

$b_2$) 10 bis 100 Mol-% mindestens eines modifizierten Polyetherdiols aus

$b_{21}$) mindestens einem Polyetherdiol

$b_{22}$) mindestens einer aliphatischen und/oder cycloaliphatischen Dicarbonsäure und

$b_{23}$) mindestens einer aliphatischen, gesättigten Verbindung mit einer Epoxidgruppe und mit 8 bis 21 C-Atomen pro Molekül,

eingesetzt, wobei die Summe der Anteile der Komponenten $b_1$ und $b_2$ sowie die Summe der Anteile der Komponenten $b_{21}$ bis $b_{23}$ jeweils 100 Mol-% beträgt.

Zur Herstellung der modifizierten Polyetherdiole nach den üblichen Methoden werden die Komponeten $b_{21}$ bis $b_{23}$ in solchen Mengen eingesetzt, daß das Äquivalentverhältnis der OH-Gruppen der Komponente $b_{21}$ zu den Carboxylgruppen der Komponente $b_{22}$ zwischen 0,45 und 0,55, bevorzugt 0,5, liegt und daß das Äquivalentverhältnis der Epoxidgruppen der Komponente $b_{23}$ zu den Carboxylgruppen der Komponente $b_{22}$ zwischen 0,45 und 0,55, bevorzugt 0,5, liegt.

Beispiele für geeignete Polyetherdiole $b_1$ und $b_{21}$ sind die bereits aufgeführten Polyoxialkylenglykole, wobei die Alkylengruppen 1 bis 6 C-Atome aufweisen. Bevorzugt werden dabei als Komponente $b_1$ Polyoxipropylenglykole mit einem zahlenmittleren Molekulargewicht zwischen 600 und 2000 eingesetzt. Als Komponente $b_{21}$ werden bevorzugt Polyoxibutylenglykole (Poly-THF) mit einem zahlenmittleren Molekulargewicht > 1000 eingesetzt.

Als Komponente $b_{22}$ werden bevorzugt aliphatische sowie cycloaliphatische Dicarbonsäuren mit 8 bis 36 C-Atomen pro Molekül eingesetzt, wie z. B. Hexahydrophthalsäure. Als Komponente $b_{23}$ geeignet sind beispielsweise epoxidierte Vinylcyclohexanverbindungen, epoxidierte, monoolefinisch ungesättigte Fettsäuren und/oder Polybutadiene.

Bevorzugt werden als Komponente $b_{23}$ Glycidylester verzweigter Monocarbonsäuren, wie z. B. der Glycidylester der Versaticsäure, eingesetzt.

Zur Einführung der ethylenisch ungesättigten Gruppen in das Polyurethan-Oligomer werden monoethylenisch ungesättigte Verbindungen mit einer Gruppe mit einem aktiven Wasserstoffatom eingesetzt, die ein zahlenmittleres Molekulargewicht von 116 bis 1000, bevorzugt 116 bis 400, aufweisen. Als Beispiele für geeignete Komponenten c seien z. B. Hydroxialkylester ethylenisch ungesättigter Carbonsäuren, wie z.B. Hydroxiethylacrylat, Hydroxipropylacrylat, Hydroxibutylacrylat, Hydroxiamylacrylat, Hydroxihexylacrylat, Hydroxioctylacrylat, sowie die entsprechenden Hydroxialkylester der Methacryl-, Fumar-, Malein-, Itacon-, Croton- und Isocrotonsäure genannt, wobei allerdings die Hydroxialkylester der Acrylsäure bevorzugt sind.

Weiterhin als Komponente c geeignet sind Addukte aus Caprolacton und einem der oben genannnten Hydroxialkylester ethylenisch ungesättigter Carbonsäuren. Bevorzugt werden Addukte der Hydroxialkylester

4

der Acrylsäure mit einem zahlenmittleren Molekulargewicht von 300 bis 1000 eingesetzt.

Für die Herstellung der erfindungsgemäßen Oligomere als Komponente d geeignet sind aliphatische und/oder cycloaliphatische Diisocyanate, wie z. B. 1,3-Cyclopentan-, 1,4-Cyclohexan-, 1,2-Cyclohexandiisocyanat, 4,4'-Methylen-bis-(cyclohexylisocyanat) und Isophorondiisocyanat, Trimethylen-, Tetramethylen-, Pentamethylen-, Hexamethylen- und Trimethylhexamethylen-1,6-diisocyanat sowie die in der EP-A-204 161, Spalte 4, Zeilen 42 bis 49 beschriebenen, von Dimerfettsäuren abgeleiteten Diisocyanate.

Bevorzugt eingesetzt werden Isophorondiisocyanat und Trimethylhexamethylen -1,6-diisocyanat.

Es ist erfindungswesentlich, daß die Komponenten a bis d zur Herstellung der Oligomere in solchen Mengen eingesetzt werden, daß

1. das Molverhältnis der Komponente a zu der Komponente b zwischen 0,1 : 1 und 1,1 : 1 bevorzugt zwischen 0,1 und 0,8, liegt,

2. das Molverhältnis der Komponente c zu der Komponente a zwischen 2 : 1 und 10 : 1, bevorzugt zwischen 2,5 und 10, liegt und

3. das Äquivalentverhältnis der Isocyanatgruppen der Komponente d zu den aktiven Wasserstoffatomen aus den Komponenten a plus b plus c zwischen 0,9 und 1,0 liegt.

Die erfindungsgemäßen Oligomere können auf unterschiedliche Weise hergestellt werden. So ist es beispielsweise möglich, zunächst das Diisocyanat d mit den Kettenverlängerungsmitteln a und b umzusetzen und anschließend die restlichen freien Isocyanatgruppen mit der ethylenisch ungesättigten Verbindung c umzusetzen.

Außerdem ist es möglich, die Oligomere herzustellen, indem zunächst ein Teil der Isocyanatgruppen der Komponente d mit der ethylenisch ungesättigten Verbindung c umgesetzt wird und indem anschließend die restlichen freien Isocyanatgruppen mit den Kettenverlängerungsmitteln a und b umgesetzt werden.

Weiterhin ist es möglich, die Polyurethan-Oligomere nach den in der EP-A-223 086 auf Seite 5 beschriebenen Verfahren herzustellen.

Bevorzugt werden die Polyurethan-Oligomere mittels eines zweistufigen Verfahrens hergestellt, indem zunächst die stöchiometrische Polyaddition der Komponenten a bis d solange durchgeführt wird, bis mehr als 85 % der NCO-Gruppen der Komponente d abreagiert haben. In diesem ersten Verfahrensschritt werden die Komponenten a bis d in solchen Mengen eingesetzt, daß das Äquivalentverhältnis der NCO-Gruppen der Komponente d zu den aktiven Wasserstoffatomen der Komponenten a bis c 1:1 beträgt.

In einem zweiten Verfahrensschritt wird dann der Rest der übrigen Komponenten (entsprechend dem gewünschten NCO: OH-Verhältnis) zugesetzt und die Reaktion bis zu einem Umsatz der NCO-Gruppen > 99 % fortgeführt. Bevorzugt wird in diesem zweiten Verfahrensschritt weitere Komponente c zugesetzt und durch die Zugabe dieser Komponente c das gewünschte NCO: OH-Äquivalentverhältnis eingestellt.

Die erfindungsgemäßen Urethan-Oligomere weisen üblicherweise zahlenmittlere Molekulargewichte von 2500 bis 10000, bevorzugt 3000 bis 6000 (gemessen mit GPC gegen Polystyrolstandard), gewichtsmittlere Molekulargewichte von 5000 bis 50000, bevorzugt 7000 bis 20000 (gemessen mit GPC gegen Polystyrolstandard), Doppelbindungsgehalte von 0,45 bis 1,5, bevorzugt 0,45 bis 0,9 mol/kg und besonders bevorzugt 0,45 bis 0,63 und ganz besonders bevorzugt 0,5 bis 0,63 mol/kg sowie eine Funktionalität von >2 bis 3,5, bevorzugt 2,2 bis 2,8, jeweils pro statistischem Durchschnittspolymermolekül, auf.

Die erfindungsgemäßen Oligomere werden als filmbildende Komponente A in strahlenhärtbaren Überzugsmassen eingesetzt. Üblicherweise enthalten die Überzugsmassen 10 bis 78 Gew.-%, bevorzugt mindestens 15 Gew.-% und besonders bevorzugt 63 bis 73 Gew.-%, jeweils bezogen auf das Gesamtgewicht der Überzugsmasse, dieser erfindungsgemäßen Oligomere.

Als weiteren Bestandteil können die Überzugsmassen 0 bis 60 Gew.-%, bevorzugt 0 bis 50 Gew.-%, jeweils bezogen auf das Gesamtgewicht der Überzugsmasse, mindestens eines weiteren ethylenisch ungesättigten Oligomers B enthalten. Neben ungesättigten Polyestern, Polyesteracrylaten und Acrylatcopolymerisaten werden vor allem Urethanacrylat-Oligomere, ausgenommen die als Komponete A eingesetzten Urethanacrylat-Oligomere, eingesetzt. Durch die Art und Menge dieser Komponente B können die Eigenschaften der ausgehärteten Beschichtung gezielt gesteuert werden. Je höher der Anteil dieser Komponente B ist, desto höher ist im allgemeinen der E-Modul-Wert der ausgehärteten Beschichtung. Die Komponente B wird den Überzugsmassen daher vor allem dann zugesetzt, wenn die Überzugsmassen als Decklack eingesetzt werden. Der Einfluß dieser Komponente B auf die Eigenschaften der resultierenden Beschichtung ist dem Fachmann aber bekannt. Die jeweils günstigste Einsatzmenge kann daher leicht anhand weniger Routineversuche ermittelt werden.

Diese als Komponente B eingesetzten ethylenisch ungesättigten Polyurethane sind bekannt. Sie können erhalten werden durch Umsetzung eines Di- oder Polyisocyanates mit einem Kettenverlängerungsmittel aus der Gruppe der Diole/Polyole und/oder Diamine/Polyamine und anschließender Umsetzung der restlichen freien Isocyanatgruppen mit mindestens einem Hydroxialkylacrylat oder Hydroxialkylester anderer ethylenisch ungesättigter Carbonsäuren.

Die Mengen an Kettenverlängerungsmittel, Di- bzw. Polyisocyanat und Hydroxialkylester einer ethylenisch ungesättigten Carbonsäure werden dabei so gewählt, daß

1. das Äquivalentverhältnis der NCO-Gruppen zu den reaktiven Gruppen des Kettenverlängerungsmittels (Hydroxyl-, Amino- bzw. Mercaptylgruppen) zwischen 3:1 und 1:2, bevorzugt 2:1, liegt und

2. die OH-Gruppen der Hydroxialkylester der ethylenisch ungesättigten Carbonsäuren in stöchiometrischer Menge in bezug auf die noch freien Isocyanatgruppen des Präpolymeren aus Isocyanat und Kettenverlängerungsmittel vorliegen.

Außerdem ist es möglich, die Polyurethane B herzustellen, indem zunächst ein Teil der Isocyanatgruppen eines Di- oder Polyisocyanates mit mindestens einem Hydroxialkylester einer ethylenisch ungesättigten Carbonsäure umgesetzt wird und die restlichen Isocyanatgruppen anschließend mit einem Kettenverlängerungsmittel umgesetzt werden. Auch in diesem Fall werden die Mengen an Kettenverlängerungsmittel, Isocyanat und Hydroxialkylester ungesättigter Carbonsäuren so gewählt, daß das Äquivalentverhältnis der NCO-Gruppen zu der reaktiven Gruppe des Kettenverlängerungsmittels zwischen 3:1 und 1:2, bevorzugt 2:1, liegt und das Äquivalentverhältnis der restlichen NCO-Gruppen zu den OH-Gruppen des Hydroxialkylesters 1:1 beträgt.

Selbstverständlich sind auch sämtliche Zwischenformen dieser beiden Verfahren möglich. Beispielsweise kann ein Teil der Isocyanatgruppen eines Diisocyanates zunächst mit einem Diol umgesetzt werden, anschließend ein weiterer Teil der Isocyanatgruppen mit dem Hydroxialkylester einer ethylenisch ungesättigten Carbonsäure und im Anschluß hieran können die restlichen Isocyanatgruppen mit einem Diamin umgesetzt werden.

Diese verschiedenen Herstellverfahren der Polyurethane sind bekannt (vgl. beispielsweise EP-A-204 161) und bedürfen daher keiner genaueren Beschreibung.

Für die Herstellung dieser Urethanacrylat-Oligomere B geeignete Verbindungen sind die bereits bei der Herstellung der Komponente A eingesetzten Verbindungen sowie außerdem die in der DE-OS 38 40 644 genannten Verbindungen.

Insbesondere beim Einsatz der erfindungsgemäßen Überzugsmassen als Decklack werden zur Herstellung der Urethanacrylat-Oligomere B bevorzugt aromatische Aufkomponenten eingesetzt. Besonders bevorzugt werden in diesem Fall 2,4- und 2,6-Toluylendiisocyanat als Isocyanatkomponente sowie aromatische Polyesterpolyole auf der Basis Phthalsäure und Isophthalsäure und/oder Polypropylenglykol, Ethylenglykol und Diethylenglykol als Kettenverlängerungsmittel eingesetzt.

Als weiteren Bestandteil enthalten die strahlenhärtbaren Überzugsmassen noch mindestens eine ethylenisch ungesättigte monomere Verbindung C, üblicherweise in einer Menge von 20 bis 50 Gew.-%, bevorzugt von 22 bis 35 Gew.-%, jeweils bezogen auf das Gesamtgewicht der Überzugsmasse.

Durch den Zusatz dieser ethylenisch ungesättigten Verbindung C werden die Viskosität und die Aushärtegeschwindigkeit der Überzugsmassen sowie die mechanischen Eigenschaften der resultierenden Beschichtung gesteuert, wie dies dem Fachmann geläufig ist und beispielsweise in der EP-A-223 086 beschrieben ist und auf die wegen weiterer Einzelheiten verwiesen wird.

Als Beispiele für Monomere, die eingesetzt werden können, seien Ethoxiethoxiethylacrylat, N-Vinylpyrrolidon, Phenoxiethylacrylat, Dimethylaminoethylacrylat, Hydroxiethylacrylat, Butoxiethylacrylat, Isobornylacrylat, Dimethylacrylamid und Dicyclopentylacrylat genannt. Geeignet sind außerdem Di- und Polyacrylate, wie z. B. Butandioldiacrylat, Hexandioldiacrylat, Trimethylolpropandi- und -triacrylat, Pentaerythritdiacrylat sowie die in der EP-A-250 631 beschriebenen, langkettigen linearen Diacrylate mit einem Molekulargewicht von 400 bis 4000, bevorzugt von 600 bis 2500. Beispielsweise können die beiden Acrylatgruppen durch eine Polyoxibutylenstruktur getrennt sein. Einsetzbar sind außerdem 1,12-Dodecyldiacrylat und das Umsetzungsprodukt von 2 Molen Acrylsäure mit einem Mol eines Dimerfettalkohols, der im allgemeinen 36 C-Atome aufweist.

Geeignet sind auch Mischungen der gerade beschriebenen Monomeren. Bevorzugt werden Phenoxiethylacrylat, Hexandioldiacrylat, N-Vinylpyrrolidon und Tripropylenglykoldiacrylat eingesetzt.

Der in den erfindungsgemäßen Überzugsmassen üblicherweise in einer Menge von 2 bis 8 Gew.-%, bevorzugt 3 bis 5 Gew.-%, bezogen auf das Gesamtgewicht der Überzugsmasse, eingesetzte Photoinitiator variiert mit der zur Härtung der Beschichtungsmittel eingesetzten Strahlung (UV-Strahlung, Elektronenstrahlung, sichtbares Licht). Bevorzugt werden die erfindungsgemäßen Überzugsmassen mittels UV-Strahlung gehärtet. In diesem Fall werden üblicherweise Photoinitiatoren auf Ketonbasis eingesetzt, beispielsweise Acetophenon, Benzophenon, Diethoxiacetophenon, 2-Hydroxi-2-methyl-1-phenylpropan-1-on, Hydroxipropylphenylketon, m-Chloroacetophenon, Propiophenon, Benzoin, Benzil, Benzildimethylketal, Anthrachinon, Thioxanthon und Thioxanthon-Derivate und Triphenylphosphin u. ä. sowie Mischungen verschiedener Photoinitiatoren.

Außerdem können die Überzugsmassen ggf. noch übliche Hilfs- und Zusatzstoffe enthalten. Diese werden üblicherweise in einer Menge von 0 bis 4 Gew.-%, bevorzugt 0,5 bis 2,0 Gew.-%, jeweils bezogen auf das Gesamtgewicht der Überzugsmasse, eingesetzt. Beispiele für derartige Stoffe sind Verlaufsmittel, Weichmacher sowie insbesondere Haftvermittler. Als Haftvermittler werden dabei Alkoxisilane, wie beispielsweise N-$\beta$-Aminoethyl-$\gamma$-aminopropyltrimethoxisilan, $\gamma$-Aminopropyltrimethoxisilan, N-Methyl-$\gamma$-aminopropyltrimethoxisilan oder triaminomodifiziertes Propyltrimethoxisilan (z. B. Haftvermittler DYNASYLAN®, "Typ TRIAMO", Handelsprodukt der Dynamit Nobel Chemie) eingesetzt.

Die Überzugsmassen können mittels bekannter Applikationsmethoden, wie z. B. Spritzen, Walzen, Fluten, Tauchen, Rakeln oder Streichen, auf das Substrat aufgebracht werden.

Die Härtung der Lackfilme erfolgt mittels Strahlung, bevorzugt mittels UV-Strahlung. Die Anlagen und Bedingungen für diese Härtungsmethoden sind aus der Literatur bekannt (vgl. z.B. R. Holmes, U.V. and E.B. Curing Formulations for Printing Inks, Coatings and Paints, SITA Technology, Academic Press, London, United Kindom 1984) und bedürfen keiner weiteren Beschreibung.

Die Überzugsmassen eignen sich zur Beschichtung verschiedener Substrate, beispielsweise Glas-, Holz-, Metall- und Kunststoffoberflächen. Insbesondere werden sie aber zur Beschichtung von Glasoberflächen, besonders bevorzugt von optischen Glasfasern, eingesetzt.

Gegenstand der vorliegenden Erfindung ist daher auch ein Verfahren zum Beschichten einer Glasoberfläche, bei dem eine strahlenhärtbare Überzugsmasse aufgebracht und mittels UV- oder Elektronenstrahlung gehärtet wird, das dadurch gekennzeichnet ist, daß als strahlenhärtbare Überzugsmassen die erfindungsgemäßen Überzugsmassen eingesetzt werden.

Das erfindungsgemäße Verfahren ist besonders gut geeignet für die Beschichtung von optischen Glasfasern.

Die erfindungsgemäßen Überzugsmassen können dabei als Grundierung und/oder Decklack einer Zweischichtlackierung auf die Glasfasern aufgebracht werden. Bei der Verwendung der Überzugsmassen als Grundierung weisen die ausgehärteten Beschichtungen üblicherweise einen E-Modul-Wert (bei 2,5 %-Dehnung und Raumtemperatur) von weniger als 10 MPa auf.

Bei der Verwendung der Überzugsmassen als Decklack weisen die ausgehärteten Beschichtungen üblicherweise einen E-Modul-Wert (bei 2,5 %-Dehnung und Raumtemperatur) von 500 bis 1000 MPa auf.

Die Erfindung wird in den folgenden Beispielen näher erläutert. Alle Angaben über Teile und Prozentsätze sind Gewichtsangaben, falls nicht ausdrücklich etwas anderes festgestellt wird.

### Herstellung eines modifizierten Polyetherdiols

In einem mit Rührer, Inertgaseinleitung und Thermofühler ausgestatteten Kessel werden 51,1 Teile Polytetrahydrofuran mit einem zahlenmittleren Molekulargewicht von 1000 und einer OH-Zahl von 118 mg KOH/g und 19,1 Teile Hexahydrophthalsäureanhydrid auf 120 °C erwärmt und solange bei dieser Temperatur gehalten, bis eine Säurezahl von 102 mg KOH/g erreicht ist. Dann werden 0,02 % Chromoctoat, bezogen auf das Gewicht der Mischung aus Poly-THF, Hexahydrophthalsäure und Glycidylester der Versaticsäure und 29,7 Teile des Glycidylesters der Versaticsäure mit einem Epoxidäquivalentgewicht von 266 zugegeben. Die Mischung wird so lange auf 120 °C erwärmt, bis das Reaktionsprodukt ein Epoxidäquivalentgewicht > 20.000, eine Säurezahl von 4 mg KOH/g und eine OH-Zahl von 60 mg KOH/g aufweist.

Das modifizierte Polyetherdiol weist ein mittleres Molgewicht $M_n = 1860$ (berechnet aus der OH-Zahl), ein mittels GPC bestimmtes $M_n \approx 1500$ und ein $M_W/M_n = 1,67$ auf. Die Viskosität einer 80%igen Lösung in Butylacetat beträgt 3,8 d Pas (gemessen bei 23 °C mit dem Platte/ Kegel-Viskosimeter).

### Beispiel 1

In einem mit Rührer, Zulaufeinrichtungen, Thermofühler und Lufteinleitung versehenen Kessel werden 0,35 Mol eines handelsüblichen, ethoxilierten Trimethylolpropans mit einem zahlenmittleren Molekulargewicht von 1000, 0,65 Mol handelsübliches Polyoxipropylenglykol mit einem zahlenmittleren Molekulargewicht von 600, 0,65 Mol des oben beschriebenen modifizierten Polyetherdiols, 1,75 Mol Hydroxiethylacrylat, 0,05 % Dibutylzinndilaurat (bezogen auf das Gesamtgewicht der Summe der Komponenten a, b, c und d), 0,1 % 2,6-Ditert.-butylcresol (bezogen auf das Gesamtgewicht der Summe der Komponenten a, b, c und d) und 30 ppm Phenothiazin (bezogen auf das Gesamtgewicht der Summe der Komponenten a, b, c und d) vorgelegt und auf 60 °C erwärmt. Danach werden im Laufe von 2,5 h 2,70 Mole Isophorondiisocyanat bei 50 °C zudosiert. Danach wird mit Phenoxiethylacrylat auf einen theoretischen Festkörper von 90 % (Summe der Komponenten a bis d) verdünnt und die Temperatur so lange bei 60 °C gehalten, bis ein NCO-Wert von 1 % erreicht ist. Dann werden 0,05 % Dibutylzinndilaurat und 0,51 Mole eines handelsüblichen Hydroxiethylacrylat Caprolacton-Oligomers mit einem zahlenmittleren Molekulargewicht von 344 (Handelsprodukt TONE M 100 der Firma Union Carbide) bei einer Temperatur von 80 °C zugegeben und die Temperatur so lange bei 80 °C gehalten, bis ein NCO-Wert von <0,1 % erreicht ist. Das so erhaltene Oligomer weist einen Doppelbindungsgehalt von 0,6 mol/kg und eine Funktionalität von 2,5 auf.

Eine 40 %ige Lösung (bezogen auf den theoretischen Festkörpergehalt) des erhaltenen Oligomers 1 in Phenoxiethylacrylat weist eine Viskosität von 4,9 dPas auf (gemessen bei 23 °C mit dem Platte-Kegel-Viskosimeter).

Aus 78,1 Teilen der oben beschriebenen 90 %igen Lösung des Urethan-Oligomers 1, 12,1 Teilen Phenoxiethylacrylat, 6,2 Teilen N-Vinylpyrrolidon, 1,6 Teilen N-$\beta$-Aminoethyl-$\gamma$-aminopropyltrimethoxisilan und 2,0 Teilen Diethoxiacetophenon wird durch Mischen eine strahlenhärtbare Überzugsmasse 1 hergestellt.

Gut gereinigte (vor allem fettfreie) Glasplatten (Breite x Länge = 98 x 161 mm) werden am Rand mit Tesakrepp®-Klebeband Nr. 4432 (Breite 19 mm) abgeklebt und die Überzugsmasse 1 aufgerakelt (Trocken-filmstärke 180 $\mu$m).

Die Aushärtung erfolgt mit Hilfe einer UV-Bestrahlungsanlage, ausgerüstet mit zwei Hg-Mitteidruckstrahlern von je 80 W/cm Lampenleistung, bei einer Bandgeschwindigkeit von 40 m/Minute, in 2 Durchläufen bei Halblastbetrieb (= 40 W/cm).

Die eingestrahlte Dosis beträgt hierbei 0,08 J/cm$^2$ (gemessen mit dem Dosimeter, UVICURE, System EIT der Firma Eltosch).

Es wurden ausgehärtete Beschichtungen mit sehr guten mechanischen Eigenschaften erhalten, die sich außerdem durch eine gute Alterungsbeständigkeit, ein gu-tes Tieftemperaturverhalten sowie ein verbessertes Verhalten bei der Absorption und Desorption von Wasser auszeichnen.

Die Ergebnisse der E-Modul-Bestimmung bei 0,5- und 2,5 %-Dehung (entsprechend der Norm DIN 53 455) sowie die Ergebnisse der Reißdehnungs-Prüfung sind in Tabelle 2 dargestellt. Außerdem sind in Tabelle 2 die Ergebnisse der Messung der E-Modul-Werte (2,5 % Dehnung) nach unterschiedlicher Alterung der ausgehärteten Beschichtungen dargestellt.

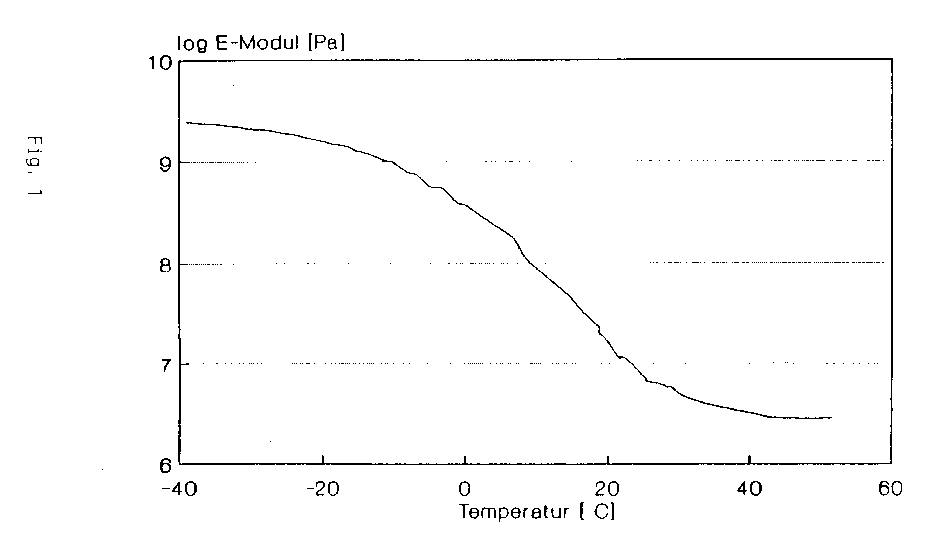

Die Abhängigkeit des E-Modul-Wertes von der Temperatur ist in Abbildung 1 dargestellt. Die Messungen erfolgten mit dem Gerät DMTA der Firma Polymer Laboratories Ltd..

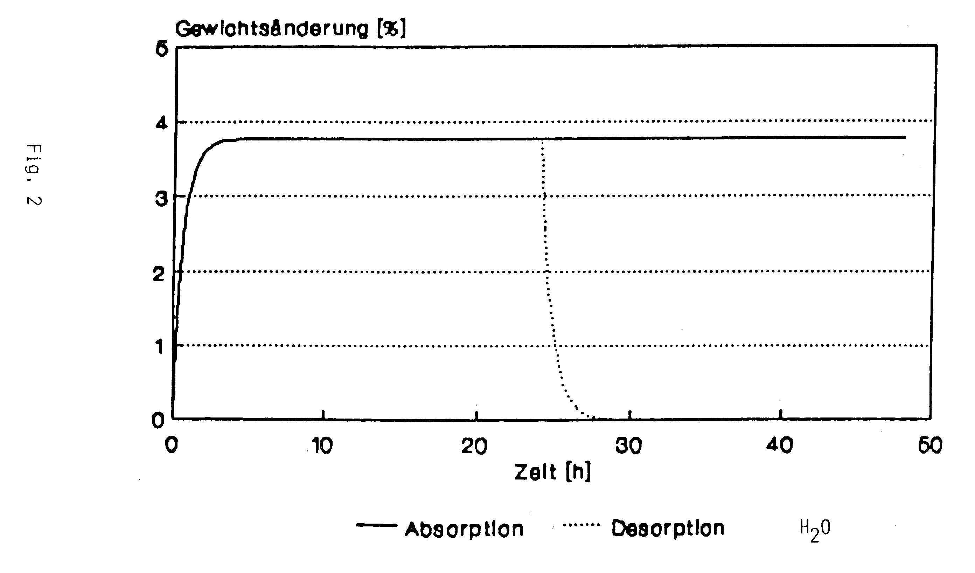

Das Absorptions- und Desorptionsverhalten der ausgehärteten Beschichtung gegenüber Wasser ist in der Abbildung 2 dargestellt.

Vergleichsbeispiel 1

In einem mit Rührer, Zulaufeinrichtungen, Thermofühler und Lufteinleitung versehenen Kessel werden 2,0 Mole Isophorondiisocyanat und 0,05 % Dibutylzinndilaurat (bezogen auf das Gesamtgewicht der Summe der Komponenten a bis d) vorgelegt und auf 60 °C erwärmt. Danach werden 1,30 Mole handelsübliches Polyoxipropylenglykol mit einem zahlenmittleren Molekulargewicht von 600 bei 60 °C während einer Zeit von 120 bis 180 min zudosiert. Die Temperatur wird so lange bei 60 °C gehalten, bis ein NCO-Wert von 4,5 % erreicht ist. Dann werden 0,1 % 2,6-Di-tert.-butylcresol (bezogen auf das Gesamtgewicht der Summe der Komponenten a bis d) und 40 ppm Phenothiazin (bezogen auf das Gesamtgewicht der Summe der Komponenten a bis d) in den Kessel gegeben. Danach werden bei 60 °C 1,54 Mole Hydroxiethylacrylat während einer Zeit von 30 min zudosiert. Nun wird mit Phenoxiethylacrylat auf einen theoretischen Festkörpergehalt von 90 % (bezogen auf das Gesamtgewicht der Summe der Komponenten a bis d) angelöst. Die Temperatur wird dann so lange bei 60 °C gehalten, bis ein NCO-Gehalt <0,1 % erreicht ist.

Das so erhaltene Oligomer 2 weist einen Doppelbindungsgehalt von 1,01 mol/kg und eine Funktionalität von 2,0 auf. Eine 50 %ige Lösung (bezogen auf den theoretischen Festkörpergehalt) des erhaltenen Oligomers 2 in Phenoxiethylacrylat weist eine Viskosität von 10 dPas auf (gemessen bei 23 °C mit dem Platte-Kegel-Viskosimeter).

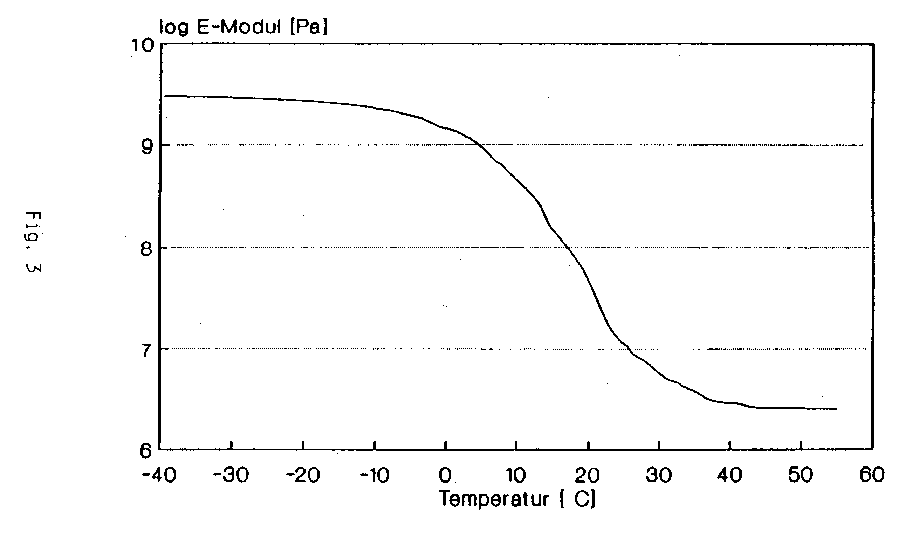

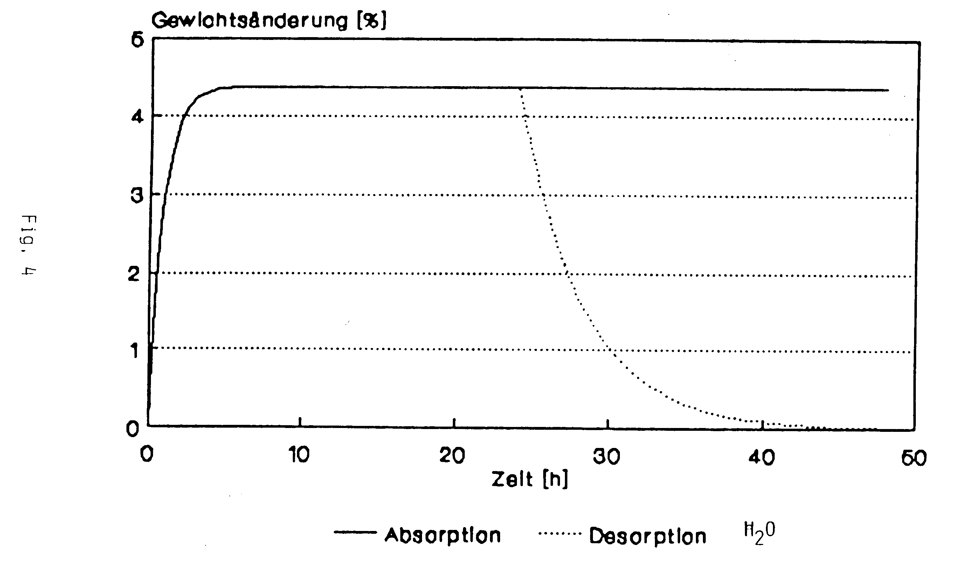

Analog zu Beispiel 1 wird aus 78,1 Teilen der oben beschriebenen 90 %igen Lösung des Urethan-Oligomers 2, 12,1 Teilen Phenoxiethylacrylat, 6,2 Teilen N-Vinyl-pyrrolidon, 1,6 Teilen N-$\beta$-Aminoethyl-$\gamma$-aminopropyltrimethoxisilan und 2,0 Teilen Diethoxiacetophenon durch Mischen eine strahlenhärtbare Überzugsmasse 2 hergestellt. Die Applikation dieser Überzugsmasse 2 sowie die Prüfung der ausgehärteten Beschichtung erfolgt analog Beispiel 1. Die Ergebnisse sind in der Tabelle 2 sowie in den Abbildungen 3 und 4 dargestellt.

Tabelle 1

| Zusammensetzung der Urethan-Oligomere (in Molen) | | | Beispiel 1 | Vergleich 1 |
|---|---|---|---|---|
| a) | ethoxiliertes Trimethylolpropan ($M_n$ = 1000) | | 0,35 | - |
| $b_1$) | Polyoxipropylenglykol ($M_n$ = 600) | | 0,65 | 1,30 |
| $b_2$) | modifiziertes Polyetherdiol ($M_n$ = 1860) | | 0,65 | - |
| c) | Hydroxiethylacrylat | | 1,75 | 1,54 |
| c) | Hydroxiethylacrylat-Caprolacton-Oligomer | | 0,51 | - |
| d) | Isophorondiisocyanat | | 2,70 | 2,0 |
| | Molverhältnis a/b | | 0,27 | 0 |
| | Molverhältnis c/a | | 6,46 | ∞ |
| | Äquivalentverh. NCO/OH | | 0,91 | 0,97 |

Tabelle 2

| Prüfergebnisse | 1 | V1 |
|---|---|---|
| Reißdehnung in % | 53,1 | 58 |
| E05-Modul (0,5%-Dehnung) in MPa | 3,1 | 2,75 |
| E25-Modul (2,5%-Dehnung) in MPa | 2,9 | 2,6 |
| E25 nach 800 h, 55 °C, in MPa | 3 | 2,7 |
| E25 nach 800 h, 90 °C, in MPa | 4,2 | 7,5 |
| E25 nach 800 h, 120 °C, in MPa | 7,3 | 18,3 |

Beispiel 2

In dem in Beispiel 1 beschriebenen Kessel werden 2 mol Isophorondiisocyanat vorgelegt und 0,05 % Dibutylzinndilaurat und 30 ppm Phenothiazin zugegeben und auf 60 °C aufgeheizt. Dann läßt man 2 mol Hydroxiethylacrylat so zutropfen, daß die Temperatur 60 °C nicht übersteigt.

Dann läßt man 1 mol ethoxiliertes Trimethylolpropan (20 mol Ethylenoxid pro mol Trimethylolpropan) ebenfalls bei 60 °C zutropfen. Die Mischung wird solange bei 60 °C gehalten. bis ein NCO-Gehalt von 0 % erreicht ist. Das so erhaltene Zwischenprodukt 1 wird anschließend weiterverarbeitet.

2 mol Isophorondiisocyanat und Dibutylzinndilaurat werden vorgelegt und 0,65 mol Polyoxitetramethylenglykol mit einem zahlenmittleren Molekulargewicht von 1000 und 0,65 mol des modifizierten Polyetherdiols als Gemisch zugegeben und die Temperatur solange auf 60 °C gehalten, bis ein NCO-Gehalt von 2,7 % erreicht ist. Dann wird Phenothiazin als Stabilisator zugesetzt. Anschließend wird eine Mischung aus 1,05 mol Hydroxiethylacrylat und 0,35 mol des oben beschriebenen Zwischenproduktes 1 zudosiert und die Temperatur solange bei 60 °C gehalten, bis ein NCO-Gehalt von < 0,1 % erreicht ist.

Aus 70 Teilen des oben beschriebenen Urethan-Oligomers, 20,0 Teilen Phenoxiethylacrylat, 6,5 Teilen N-Vinylpyrrolidon, 1,5 Teilen N-β-Aminoethyl-γ-aminopropyltrimethoxisilan und 2,0 Teilen Diethoxiacetophenon wird durch Mischen die strahlenhärtbare Überzugsmasse hergestellt. Die chemischen Eigenschaften sind in Tabelle 4 dargestellt. Gut gereinigte (vor allem fettfreie) Glasplatten (Breite x Länge = 98 x 161 mm) werden am Rand mit Tesakrepp®-Klebeband Nr. 4432 (Breite 19 mm) abgeklebt und die Überzugsmasse aufgerakelt (Trockenfilmstärke 180 μm).

Die Aushärtung erfolgt mit Hilfe einer UV-Bestrahlungsanlage, ausgerüstet mit zwei Hg-Mitteldruckstrahlern von je 80 W/cm Lampenleistung, bei einer Bandgeschwindigkeit von 40m/Minute, in 2 Durchläufen bei Halblastbetrieb ( = 40 W/cm).

Die eingestrahlte Dosis beträgt hierbei 0,08 J/cm$^2$ (gemessen mit dem Dosimeter, UVICURE, System EIT der Firma Eltosch).

Es wurden ausgehärtete Beschichtungen mit sehr guten mechanischen Eigenschaften erhalten, die sich außerdem durch eine gute Alterungsbeständigkeit, ein gutes Tieftemperaturverhalten sowie ein verbessertes Verhalten bei dere Absorption und Desorption von Wasser auszeichnen.

Die Ergebnisse der E-Modul-Bestimmung bei 0,5- und 2,5 %-Dehnung (entsprechend der Norm DIN 53 455) sowie die Ergebnisse der Reißdehnungs-Prüfung sind in Tabelle 5 dargestellt.

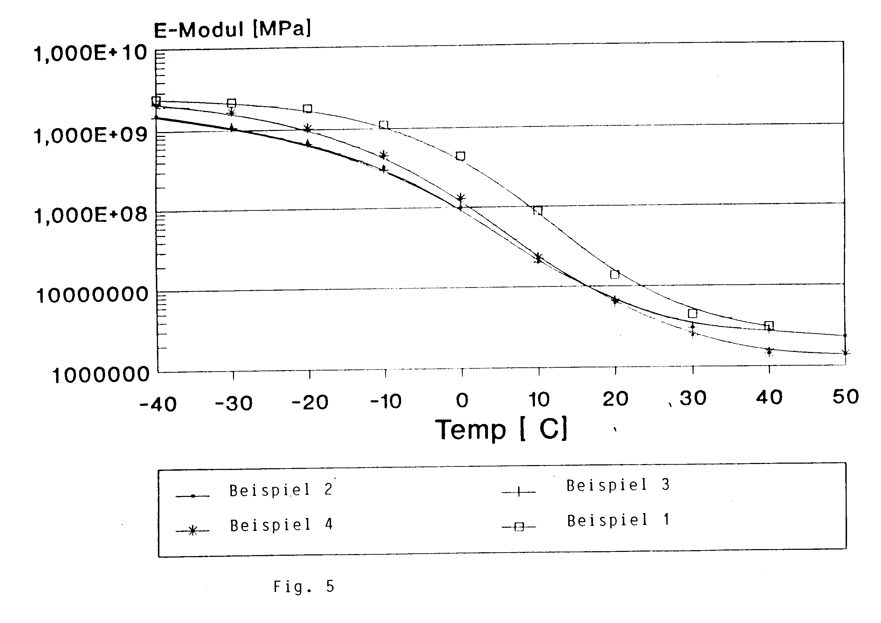

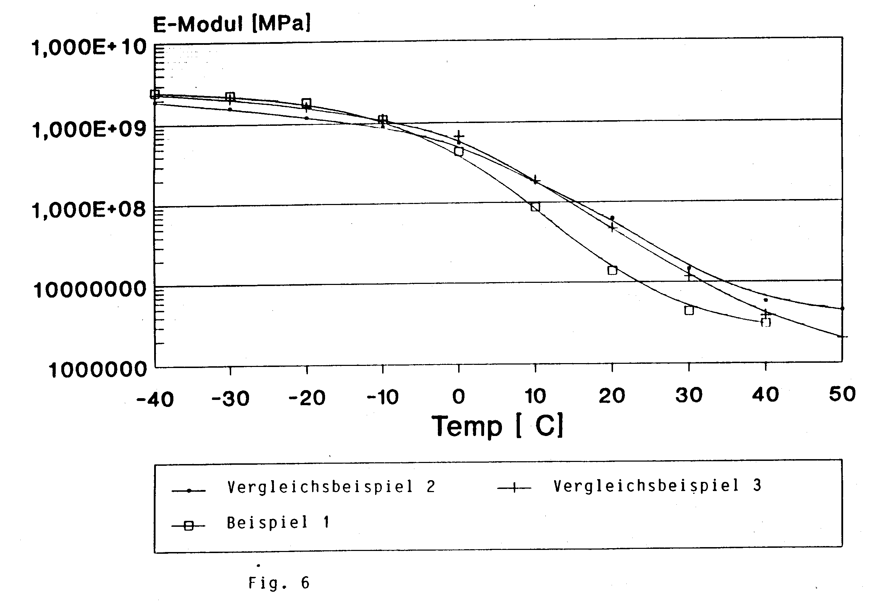

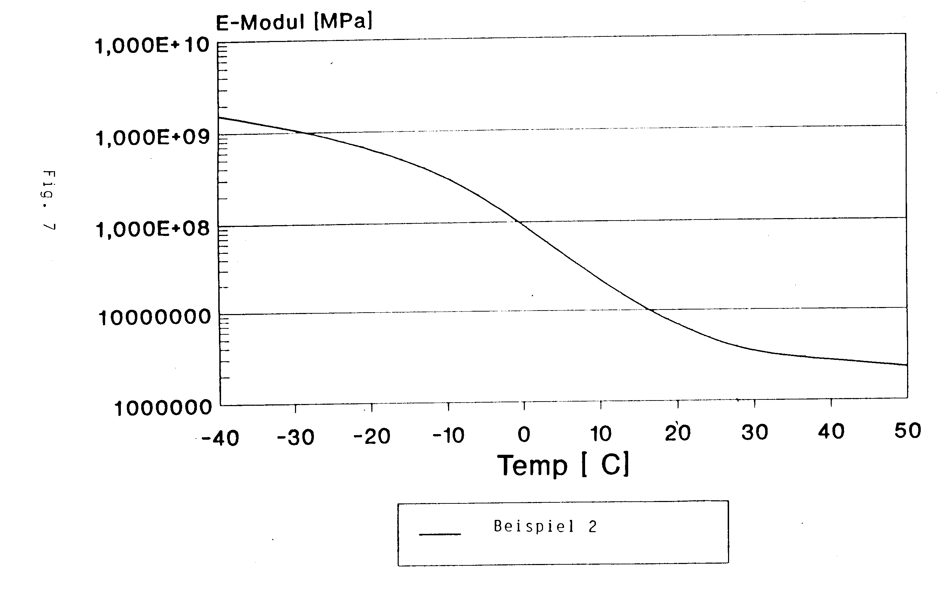

Die Abhängigkeit des E-Modul-Wertes von der Temperatur ist in der Tabelle 6 und den Abbildungen 5 und 7 dargestellt. Die Messungen erfolgten mit dem Gerät DMTA der Firma Polymer Laboratories Ltd..

Beispiel 3

Die Herstellung des Zwischenproduktes 1 erfolgt analog zu Beispiel 2.

2 mol Isophorondiisocyanat und Dibutylzinndilaurat werden vorgelegt und 0,65 mol Polyoxitetramethylenglykol mit einem zahlenmittleren Molekulargewicht von 1000 und 0,65 mol des modifizierten Polyetherdiols als Gemisch zugegeben und die Temperatur solange auf 60°C gehalten, bis ein NCO-Gehalt von 2,6 % erreicht ist. Dann wird Phenothiazin als Stabilisator zugesetzt. Anschließend wird eine Mischung aus 0,35 mol Hydroxiethylacrylat und 1,05 mol des oben beschriebenen Zwischenproduktes 1 zudosiert und die Temperatur solange bei 60°C gehalten, bis ein NCO-Gehalt von < 0,1 % erreicht ist.

Die Herstellung, Applikation und Aushärtung des strahlenhärtbaren Überzugsmittels sowie die Prüfung der Beschichtung erfolgte analog zu Beispiel 2.

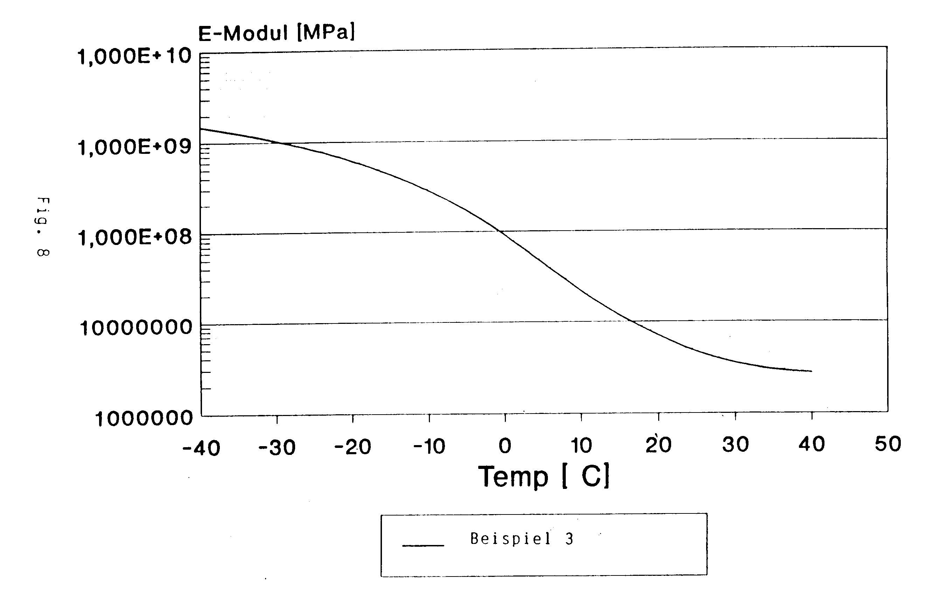

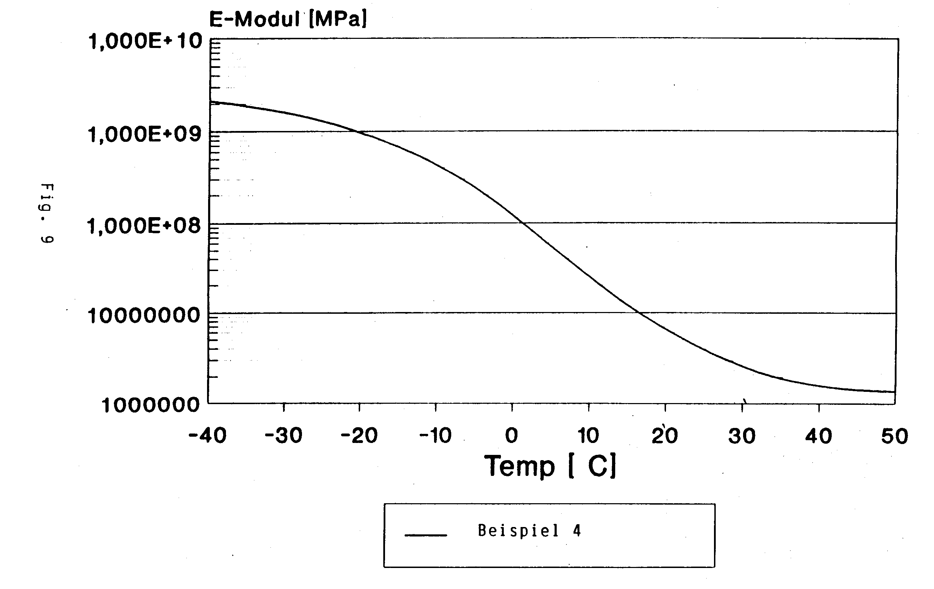

Die Prüfergebnisse sind in Tabelle 5 und 6 sowie in den Abbildungen 5 und 8 dargestellt.

Beispiel 4

Die Herstellung des Zwischenproduktes 1 erfolgt analog zu Beispiel 2.

2 mol Isophorondiisocyanat werden vorgelegt und 1,3 mol modifiziertes Polyetherdiol werden zugegeben. Nach Beendigung der Zugabe wird die Mischung noch 6 h bei 60°C gehalten. Dann werden 1,4 mol des oben beschriebenen Zwischenproduktes zudosiert und die Temperatur solange bei 60°C gehalten, bis ein NCO-Gehalt von < 0,1 % erreicht ist.

Die Herstellung, Applikation und Aushärtung des strahlenhärtbaren Überzugsmittels sowie die Prüfung der Beschichtung erfolgte analog zu Beispiel 2.

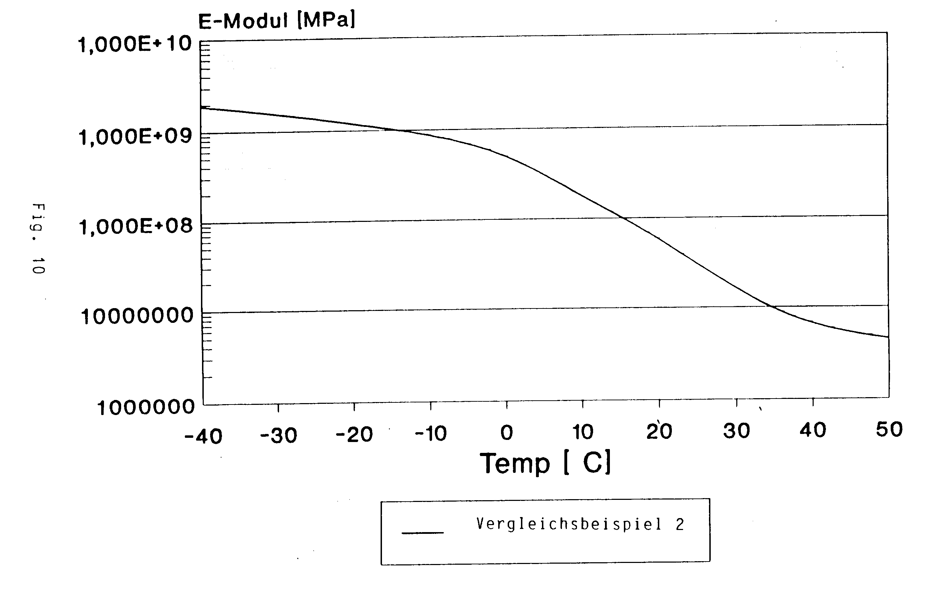

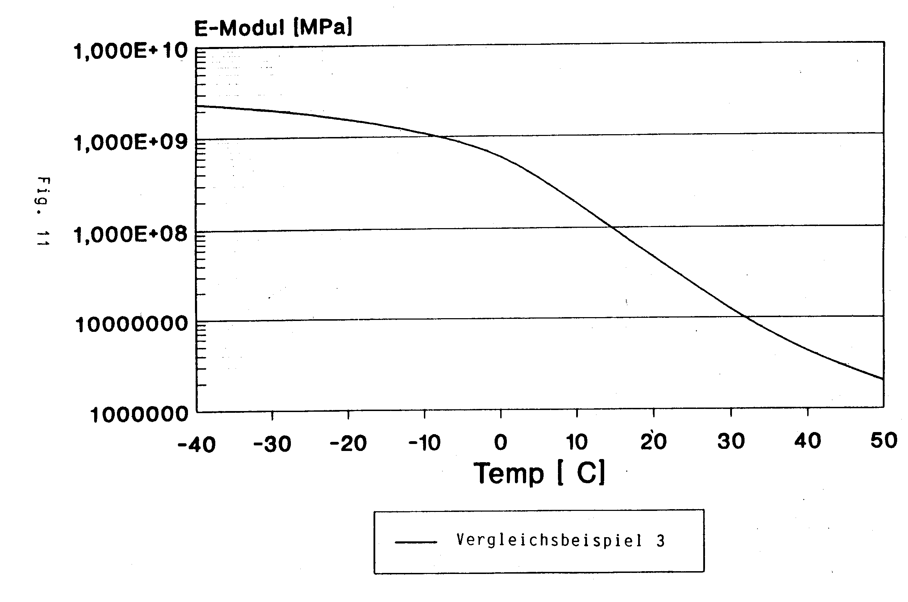

Die Prüfergebnisse sind in Tabelle 5 und 6 sowie in den Abbildungen 5 und 9 dargestellt.

Vergleichsbeispiele 2 und 3

Analog zu Beispiel 2 wurden Polyurethanacrylat-Oligomere aus den in Tabelle 3 aufgeführten Komponenten hergestellt.

Aus diesen Urethanacrylat-Oligomeren wurden analog zu Beispiel 2 strahlenhärtbare Überzugsmassen hergestellt. Die Applikation, Aushärtung und Prüfung der Beschichtungen erfolgte ebenfalls analog zu Beispiel 2.

Die Ergebnisse der E-Modul-Bestimmung bei 0,5 %- und 2,5 %-Dehnung (entsprechend der Norm DIN 53 455) sowie die Ergebnisse der Reißdehnungs-Prüfung sind in Tabelle 5 dargestellt.

Die Abhängigkeit des E-Modul-Wertes von der Temperatur ist in Abbildung 5 und in Tabelle 8 dargestellt. Die Messungen erfolgten mit dem Gerät DMTA der Firma Polymer Laboratories Ltd..

Tabelle 3

| Zusammensetzung der Polyurethanacrylat-Oligomere in Molen | | | | | |
|---|---|---|---|---|---|
| Beispiel | 2 | 3 | 4 | V2 | V3 |
| p-THF 1000 | 0,65 | 0,65 | - | 0,65 | - |
| P 600 | - | - | - | - | - |
| mod. PE | 0,65 | 0,65 | 1,30 | 0,65 | 1,30 |
| eth. TMP 7 | - | - | - | 0,70 | 0,70 |
| eth. TMP 20 | 0,35 | 1,05 | 1,40 | - | - |
| HEA | 1,75 | 2,45 | 2,80 | 2,10 | 2,10 |
| IPDI | 2,70 | 4,10 | 4,80 | 3,40 | 3,40 |

In Tabelle 3 wurden folgende Abkürzungen verwendet:

p-THF 1000:     Polyoxitetramethylenglykol mit einem zahlenmittleren Molekulargewicht von 1000

| | |
|---|---|
| P 600: | Polyoxipropylenglykol mit einem zahlenmittleren Molekulargewicht von 600 |
| mod. PE: | modifiziertes Polyetherdiol |
| eth. TMP7: | ethoxiliertes Trimethylolpropan mit 7 Ethylenoxideinheiten pro Trimethylolpropan ($M_n$ = 414) |
| eth. TMP 20: | ethoxiliertes Trimethylolpropan mit 20 Ethylenoxideinheiten pro Trimethylolpropan |
| HEA: | 2-Hydroxiethylacrylat |
| IPDI: | Isophorondiisocyanat |

Tabelle 4: Chemische Eigenschaften der flüssigen Überzugsmittel

|                  | 1    | 2    | 3    | 4    | V1   | V2    | V3   |
|------------------|------|------|------|------|------|-------|------|
| Oligomer         | 1    | 3    | 4    | 5    | 2    | 6     | 7    |
| DBC (Überzugsm.) | 2,07 | 2,02 | 2,02 | 1,99 | 2,31 | 1,91  | 2,01 |
| DBC (Oligomer)   | 0,67 | 0,6  | 0,61 | 0,56 |      | 0,69· | 0,6  |
| C = C - R        | 3,39 | 3,78 | 3,73 | 4,07 | 2,25 | 2,80  | 3,80 |
| Funkt.           | 2,5  | 2,5  | 3,5  | 4    | 2    | 3     | 3    |

DBC (Über.):      Konzentration der Acrylgruppen in mol/kg in dem Überzugsmittel

DBC (Oligomer):   Konzentration der Acrylgruppen in mol/kg in dem Oligomer

C = C - R:        Im Überzugsmittel bestimmtes Verhältnis der Acrylgruppen der
                  Monomeren zu den Acrylgruppen des Oligomers

Funkt.:           mittlere Polymerfunktionalität in Acrylgruppen

Tabelle 5: Mechanische Prüfwerte der Beschichtungen

|                              | 1   | 2   | 3   | 4   | V2   | V3   |
|------------------------------|-----|-----|-----|-----|------|------|
| Reißdehnung (%)              | 53  | 48  | 44  | 42  | 56   | 62   |
| E-Modul (0,5 %-Dehnung) in MPa | 3,1 | 2,8 | 2,7 | 2,5 | 17   | 15   |
| E-Modul (2,5 %-Dehnung) in MPa | 2,9 | 2,6 | 2,5 | 2,2 | 15,7 | 13,5 |

EP 0 545 969 B1

Tabelle 6

Beispiel 2                    Beispiel 3

| T [°C] | " | log E | T [°C] | " | log E | |
|---|---|---|---|---|---|---|
| -41 | " | 9,204 | -39 | " | 9,174 | |
| -40 | " | 9,191 | -38,5 | " | 9,161 | |
| -39 | " | 9,178 | -37,5 | " | 9,148 | |
| -38,5 | " | 9,173 | -36,5 | " | 9,132 | |
| -37,5 | " | 9,16 | -35,5 | " | 9,122 | |
| -36,5 | " | 9,148 | -35 | " | 9,107 | |
| -35,5 | " | 9,134 | -34 | " | 9,092 | |
| -34,5 | " | 9,122 | -32,5 | " | 9,074 | |
| -33,5 | " | 9,099 | -32 | " | 9,054 | |
| -32,5 | " | 9,072 | -31 | " | 9,043 | |
| -31 | " | 9,063 | -30 | " | 9,032 | |
| -30,5 | " | 9,045 | -29 | " | 9,011 | |
| -29,5 | " | 9,035 | -28,5 | " | 8,996 | |
| -28,5 | " | 8,968 | -27,5 | " | 8,977 | |
| -28 | " | 9,001 | -26,5 | " | 8,957 | |
| -27 | " | 8,981 | -26 | " | 8,945 | |
| -26 | " | 8,964 | -25 | " | 8,921 | |
| -25 | " | 8,898 | -24 | " | 8,899 | |
| -24,5 | " | 8,924 | -23 | " | 8,883 | |
| -23,5 | " | 8,908 | -22 | " | 8,862 | |
| -22,5 | " | 8,888 | -21 | " | 8,779 | |
| -21,5 | " | 8,861 | -20,5 | " | 8,818 | |
| -21 | " | 8,849 | -19,5 | " | 8,792 | |
| -20 | " | 8,829 | -18,5 | " | 8,714 | |
| -19 | " | 8,786 | -18 | " | 8,745 | |
| -18 | " | 8,775 | -17 | " | 8,721 | |
| -17,5 | " | 8,748 | -16 | " | 8,613 | |
| -16,5 | " | 8,708 | -15 | " | 8,656 | |
| -15,5 | " | 8,693 | -14,5 | " | 8,636 | |
| -14,5 | " | 8,669 | -13 | " | 8,587 | |
| -13,5 | " | 8,617 | -12 | " | 8,556 | |
| -12,5 | " | 8,6 | -11,5 | " | 8,528 | |

Fortsetzung Tabelle 6

Beispiel 2

Beispiel 3

| T[°C] | " | log E | T[°C] | " | log E |
|---|---|---|---|---|---|
| -11,5 | " | 8,574 | -10,5 | " | 8,48 |
| -11 | " | 8,525 | -9,5 | " | 8,417 |
| -10 | " | 8,511 | -8,5 | " | 8,415 |
| -9,5 | " | 8,448 | -7,5 | " | 8,382 |
| -8,5 | " | 8,426 | -7 | " | 8,327 |
| -7,5 | " | 8,403 | -6 | " | 8,299 |
| -6,5 | " | 8,35 | -5 | " | 8,153 |
| -6 | " | 8,317 | -4 | " | 8,205 |
| -4,5 | " | 8,24 | -3,5 | " | |
| -3,5 | " | 8,208 | -3 | " | 8,034 |
| -3 | " | 8,034 | -2 | " | 8,109 |
| -2 | " | 8,109 | -1 | " | 8,076 |
| -1 | " | 8,076 | -,5 | " | 7,997 |
| -,5 | " | 7,997 | 1 | " | 7,955 |
| 1 | " | 7,955 | 1,5 | " | 7,86 |
| 1,5 | " | 7,86 | 2,5 | " | 7,836 |
| 2,5 | " | 7,836 | 3 | " | 7,79 |
| 3 | " | 7,79 | 4 | " | 7,681 |
| 4 | " | 7,681 | 5 | " | 7,654 |
| 5 | " | 7,654 | 6 | " | 7,618 |
| 6 | " | 7,618 | 7,5 | " | 7,503 |
| 7,5 | " | 7,503 | 8 | " | 7,464 |
| 8 | " | 7,464 | 9 | " | 7,425 |
| 9 | " | 7,425 | 10 | " | 7,311 |
| 10 | " | 7,311 | 11 | " | 7,275 |
| 11 | " | 7,275 | 12 | " | 7,231 |
| 12 | " | 7,231 | 13 | " | 7,185 |
| 13 | " | 7,185 | 13,5 | " | 7,15 |
| 13,5 | " | 7,15 | 14,5 | " | 7,099 |
| 14,5 | " | 7,099 | 15,5 | " | 7,051 |
| 15,5 | " | 7,051 | 16 | " | 6,999 |
| 16 | " | 6,999 | 17,5 | " | 6,932 |
| 17,5 | " | 6,932 | 18 | " | 6,891 |

Fortsetzung Tabelle 6

| Beispiel 2 | | | Beispiel 3 | | | |
|---|---|---|---|---|---|---|
| T [°C] | " | log E | T [°C] | " | log E | |
| | | | | | | |
| 18 | " | 6,891 | 18,5 | " | 6,876 | |
| 18,5 | " | 6,876 | 20 | " | 6,815 | |
| 20 | " | 6,815 | 20,5 | " | 6,796 | |
| 20,5 | " | 6,796 | 21,5 | " | 6,757 | |
| 21,5 | " | 6,757 | 22,5 | " | 6,735 | |
| 22,5 | " | 6,735 | 23 | " | 6,71 | |
| 23 | " | 6,71 | 24 | " | 6,698 | |
| 24 | " | 6,698 | 25 | " | 6,67 | |
| 25 | " | 6,67 | 26 | " | 6,638 | |
| 26 | " | 6,638 | 26,5 | " | 6,623 | |
| 26,5 | " | 6,623 | 28,5 | " | 6,491 | |
| 28,5 | " | 6,491 | 30,5 | " | 6,483 | |
| 30,5 | " | 6,483 | 32,5 | " | 6,501 | |
| 32,5 | " | 6,501 | 34 | " | 6,514 | |
| 34 | " | 6,514 | 37,5 | " | 6,464 | |
| 37,5 | " | 6,464 | 38 | " | 6,46 | |
| 38 | " | 6,46 | 39 | " | 6,419 | |
| 39 | " | 6,419 | 40,5 | " | 6,44 | |
| 40,5 | " | 6,44 | 41,5 | " | 6,426 | |
| 41,5 | " | 6,426 | 42,5 | " | 6,43 | |
| 42,5 | " | 6,43 | 43 | " | 6,409 | |
| 43 | " | 6,409 | 44 | " | 6,454 | |
| 44 | " | 6,454 | 45 | " | 6,423 | |
| 45 | " | 6,423 | 46 | " | 6,366 | |
| 46 | " | 6,366 | 47 | " | 6,453 | |
| 47 | " | 6,453 | 48 | 2460368 | " | |
| 48 | " | 6,395 | | | | |
| 50 | " | 6,359 | | | | |
| 51 | " | 6,356 | | | | |
| 52 | " | 6,472 | | | | |
| 53 | " | 6,429 | | | | |
| 54 | " | 6,376 | | | | |
| 55 | " | 6,383 | | | | |
| 56 | " | 6,434 | | | | |
| 57,5 | " | 6,422 | | | | |
| 58,5 | " | 6,408 | | | | |
| 60 | " | 6,362 | | | | |

Tabelle 7

Beispiel 4                    Beispiel 1

| T [°C] | " | log E | T [°C] | " | log E |
|---|---|---|---|---|---|
| -39 | " | 9,332 | -39 | " | 9,395 |
| -38 | " | 9,33 | -38,5 | " | 9,394 |
| -37 | " | 9,317 | -38 | " | 9,393 |
| -36 | " | 9,306 | -36,5 | " | 9,39 |
| -35 | " | 9,303 | -35,5 | " | 9,378 |
| -34 | " | 9,28 | -35 | " | 9,378 |
| -33,5 | " | 9,276 | -34,5 | " | 9,377 |
| -32,5 | " | 9,265 | -33,5 | " | 9,378 |
| -31,5 | " | 9,251 | -32,5 | " | 9,363 |
| -30,5 | " | 9,232 | -31,5 | " | 9,356 |
| -29,5 | " | 9,223 | -31 | " | 9,357 |
| -29 | " | 9,208 | -29,5 | " | 9,35 |
| -27,5 | " | 9,19 | -28,5 | " | 9,337 |
| -27 | " | 9,17 | -28 | " | 9,334 |
| -26 | " | 9,146 | -27,5 | " | 9,332 |
| -25 | " | 9,134 | -26 | " | 9,32 |
| -24 | " | 9,119 | -25 | " | 9,279 |
| -23,5 | " | 9,1 | -24,5 | " | 9,305 |
| -22,5 | " | 9,074 | -24 | " | 9,303 |
| -21,5 | " | 9,052 | -22,5 | " | 9,295 |
| -21 | " | 9,039 | -21 | " | 9,267 |
| -20 | " | 9,008 | -20,5 | " | 9,263 |
| -19 | " | 8,981 | -20 | " | 9,261 |
| -18 | " | 8,958 | -19,5 | " | 9,256 |
| -17,5 | " | 8,911 | -18,5 | " | 9,241 |
| -16,5 | " | 8,896 | -17 | " | 9,205 |
| -15 | " | 8,864 | -16,5 | " | 9,202 |
| -14,5 | " | 8,825 | -16 | " | 9,199 |
| -13,5 | " | 8,792 | -15 | " | 9,192 |
| -13 | " | 8,765 | -13,5 | " | 9,136 |
| -12 | " | 8,654 | -13 | " | 9,129 |
| -11 | " | 8,689 | -12,5 | " | 9,125 |

Fortsetzung Tabelle 7

Beispiel 4                    Beispiel 1

| T[°C] | " | log E | T[°C] | " | log E |
|---|---|---|---|---|---|
| -10 | " | 8,662 | -11 | " | 9,103 |
| -9,5 | " | 8,615 | -10 | " | 9,044 |
| -8,5 | " | 8,587 | -9,5 | " | 9,041 |
| -7,5 | " | 8,515 | -9 | " | 9,037 |
| -6,5 | " | 8,393 | -6 | " | 8,892 |
| -6 | " | 8,448 | -5,5 | " | 8,921 |
| -5 | " | 8,408 | -5 | " | 8,919 |
| -4 | " | 8,321 | -,5 | " | 8,64 |
| -3 | " | 8,297 | 1 | " | 8,491 |
| -2 | " | 8,22 | 1,5 | " | 8,528 |
| -1 | " | 8,145 | 2 | " | 8,549 |
| 0 | " | 8,109 | 3 | " | 8,451 |
| 1 | " | 7,997 | 6 | " | 8,194 |
| 2 | " | 7,954 | 9,5 | " | 7,827 |
| 3 | " | 7,829 | 10 | " | 7,94 |
| 4 | " | 7,807 | 12,5 | " | 7,493 |
| 5,5 | " | 7,722 | 13,5 | " | 7,657 |
| 6 | " | 7,673 | 16,5 | " | 7,273 |
| 7 | " | 7,627 | 17 | " | 7,328 |
| 7,5 | " | 7,579 | 19 | " | 7,118 |
| 9 | " | 7,464 | 19,5 | " | 7,143 |
| 10,5 | " | 7,364 | 21,5 | " | 6,932 |
| 11 | " | 7,313 | 22,5 | " | 6,924 |
| 12 | " | 7,247 | 23 | " | 6,951 |
| 13 | " | 7,213 | 25 | " | 6,817 |
| 13,5 | " | 7,156 | 25,5 | " | 6,84 |
| 14,5 | " | 7,123 | 27,5 | " | 6,741 |
| 15,5 | " | 7,057 | 32 | " | 6,599 |
| 16 | " | 7,022 | 39 | " | 6,483 |
| 17 | " | 6,956 | 38,5 | " | 6,5 |
| 18 | " | 6,892 | 42 | " | 6,486 |
| 19 | " | 6,846 | 42,5 | " | 6,519 |
| 20 | " | 6,789 | 45,5 | " | 6,474 |

Fortsetzung Tabelle 7

Beispiel 4 Beispiel 1

| T [°C] | " | log E | T [°C] | " | log E |
|--------|---|-------|--------|---|-------|
| 20,5 | " | 6,759 | 45 | " | 6,477 |
| 23 | " | 6,617 | 47,5 | " | 6,522 |
| 24,5 | " | 6,566 | 48,5 | " | 6,489 |
| 25,5 | " | 6,518 | 51,5 | " | 6,536 |
| 26,5 | " | 6,506 | 54,5 | " | 6,472 |
| 27,5 | " | 6,491 | 57,5 | " | 6,542 |
| 28,5 | " | 6,452 | 58 | " | 6,52 |
| 29,5 | " | 6,439 | | | |
| 30,5 | " | 6,382 | | | |
| 31 | " | 6,366 | | | |
| 32 | " | 6,373 | | | |
| 33 | " | 6,302 | | | |
| 33,5 | " | 6,357 | | | |
| 34,5 | " | 6,329 | | | |
| 35,5 | " | 6,286 | | | |
| 36,5 | " | 6,283 | | | |
| 37 | " | 6,296 | | | |
| 38,5 | " | 6,269 | | | |
| 39 | " | 6,256 | | | |
| 40 | " | 6,137 | | | |
| 41 | " | 6,23 | | | |
| 42 | " | 6,247 | | | |
| 42,5 | " | 6,232 | | | |
| 43,5 | " | 6,181 | | | |
| 44 | " | 6,262 | | | |
| 45 | " | 6,215 | | | |
| 46 | " | 6,17 | | | |
| 46,5 | " | 6,158 | | | |
| 47,5 | " | 6,166 | | | |
| 48,5 | " | 6,067 | | | |
| 49,5 | " | 6,081 | | | |
| 50 | " | 6,154 | | | |
| 51 | " | 6,07 | | | |
| 53 | " | 6,025 | | | |
| 53,5 | " | 6,114 | | | |
| 54,5 | " | 6,185 | | | |
| 55,5 | " | 6,073 | | | |
| 56,5 | " | 6,083 | | | |
| 57 | " | 6,132 | | | |
| 58 | " | 6,105 | | | |
| 59 | " | 6,125 | | | |
| 59,5 | " | 6,142 | | | |
| 60,5 | " | 6,202 | | | |

Tabelle 8

| Vergleichs-beispiel 2 | | | Vergleichs-beispiel 3 | | | Vergleichs-beispiel 1 | | |
|---|---|---|---|---|---|---|---|---|
| T [°C] | " | log E | T [°C] | " | log E | T [°C] | " | log E |
| -40,5 | " | 9,237 | -38 | " | 9,363 | -38,5 | " | 9,403 |
| -41,5 | " | 9,264 | -37,5 | " | 9,366 | -38 | " | 9,408 |
| -40 | " | 9,28 | -37 | " | 9,37 | -37,5 | " | 9,41 |
| -37,5 | " | 9,223 | -36,5 | " | 9,37 | -37 | " | 9,409 |
| -37 | " | 9,241 | -36 | " | 9,368 | -36,5 | " | 9,408 |
| -37,5 | " | 9,257 | -35,5 | " | 9,367 | -36 | " | 9,406 |
| -38 | " | 9,267 | -34 | " | 9,341 | -35 | " | 9,403 |
| -35 | " | 9,24 | -33 | " | 9,334 | -33,5 | " | 9,384 |
| -33,5 | " | 9,22 | -32,5 | " | 9,333 | -33 | " | 9,382 |
| -33 | " | 9,229 | -32 | " | 9,33 | -32,5 | " | 9,382 |
| -31 | " | 9,203 | -30,5 | " | 9,312 | -32 | " | 9,38 |
| -30,5 | " | 9,2 | -28,5 | " | 9,291 | -31 | " | 9,376 |
| -30 | " | 9,199 | -28 | " | 9,294 | -29,5 | " | 9,355 |
| -29,5 | " | 9,203 | -27,5 | " | 9,289 | -28,5 | " | 9,353 |
| -27,5 | " | 9,175 | -27 | " | 9,287 | -28 | " | 9,354 |
| -26,5 | " | 9,157 | -26 | " | 9,264 | -27,5 | " | 9,351 |
| -26 | " | 9,159 | -25 | " | 9,255 | -26 | " | 9,327 |
| -25,5 | " | 9,158 | -24,5 | " | 9,251 | -24,5 | " | 9,317 |
| -23,5 | " | 9,133 | -23,5 | " | 9,251 | -24 | " | 9,317 |
| -22,5 | " | 9,116 | -22 | " | 9,215 | -23,5 | " | 9,317 |
| -22 | " | 9,115 | -21 | " | 9,207 | -23 | " | 9,313 |
| -21,5 | " | 9,117 | -20,5 | " | 9,206 | -22,5 | " | 9,313 |
| -21 | " | 9,117 | -20 | " | 9,202 | -21 | " | 9,279 |
| -19 | " | 9,075 | -19 | " | 9,186 | -20 | " | 9,274 |
| -18,5 | " | 9,071 | -17,5 | " | 9,156 | -19,5 | " | 9,273 |
| -18 | " | 9,071 | -17 | " | 9,155 | -19 | " | 9,271 |
| -17,5 | " | 9,07 | -16,5 | " | 9,153 | -18 | " | 9,256 |
| -16 | " | 9,047 | -15 | " | 9,125 | -16,5 | " | 9,226 |
| -15 | " | 8,989 | -14 | " | 9,1 | -16 | " | 9,222 |
| -14,5 | " | 9,02 | -13,5 | " | 9,099 | -15,5 | " | 9,22 |
| -14 | " | 9,02 | -13 | " | 9,096 | -14,5 | " | 9,207 |
| -13,5 | " | 9,02 | -11,5 | " | 9,061 | -13 | " | 9,165 |

Fortsetzung Tabelle 8

| Vergleichs-beispiel 2 | | | Vergleichs-beispiel 3 | | | Vergleichs-beispiel 1 | | |
|---|---|---|---|---|---|---|---|---|
| T [°C] | " | log E | T [°C] | " | log E | T [°C] | " | log E |
| -11,5 | " | 8,967 | -11 | " | 9,048 | -12,5 | " | 9,162 |
| -11 | " | 8,961 | -10,5 | " | 9,045 | -12 | " | 9,16 |
| -10,5 | " | 8,96 | -9 | " | 9,007 | -11,5 | " | 9,157 |
| -10 | " | 8,958 | -8 | " | 8,99 | -9,5 | " | 9,085 |
| -8,5 | " | 8,917 | -7,5 | " | 8,988 | -8,5 | " | 9,081 |
| -7,5 | " | 8,898 | -7 | " | 8,987 | -8 | " | 9,08 |
| -7 | " | 8,894 | -5,5 | " | 8,922 | -7,5 | " | 9,079 |
| -6,5 | " | 8,896 | -5 | " | 8,917 | -6 | " | 8,998 |
| -5 | " | 8,846 | -4,5 | " | 8,918 | -5 | " | 8,982 |
| -4 | " | 8,83 | -3,5 | " | 8,91 | -4,5 | " | 8,986 |
| -3,5 | " | 8,798 | -1,5 | " | 8,822 | -4 | " | 8,985 |
| -3 | " | 8,825 | -1 | " | 8,83 | -2 | " | 8,827 |
| -1 | " | 8,741 | -,5 | " | 8,83 | -1,5 | " | 8,886 |
| -,5 | " | 8,744 | 1 | " | 8,757 | -1 | " | 8,888 |
| 0 | " | 8,747 | 2 | " | 8,717 | ,5 | " | 8,703 |
| 1,5 | " | 8,708 | 2,5 | " | 8,725 | 1 | " | 8,761 |
| 3 | " | 8,62 | 3 | " | 8,728 | 1,5 | " | 8,768 |
| 3,5 | " | 8,635 | 5 | " | 8,531 | 2 | " | 8,767 |
| 4 | " | 8,643 | 6 | " | 8,556 | 5 | " | 8,573 |
| 6 | " | 8,508 | 6,5 | " | 8,577 | 7 | " | 8,422 |
| 6,5 | " | 8,501 | 7 | " | 8,591 | 9 | " | 8,372 |
| 7 | " | 8,52 | 7,5 | " | 8,597 | 12,5 | " | 8,097 |
| 7,5 | " | 8,524 | 10,5 | " | 8,266 | 16,5 | " | 7,757 |
| 10 | " | 8,245 | 11 | " | 8,41 | 19 | " | 7,359 |
| 10,5 | " | 8,331 | 12,5 | " | 8,04 | 20 | " | 7,414 |
| 11 | " | 8,363 | 14 | " | 8,164 | 20,5 | " | 7,468 |
| 10,5 | " | 8,389 | 14,5 | " | 8,209 | 23,5 | " | 7,158 |
| 12,5 | " | 8,101 | 16,5 | " | 7,791 | 23 | " | 7,209 |
| 14 | " | 8,132 | 17 | " | 7,982 | 23,5 | " | 7,244 |
| 14,5 | " | 8,165 | 17,5 | " | 8,023 | 26 | " | 6,909 |
| 14 | " | 8,196 | 20,5 | " | 7,679 | 26,5 | " | 6,989 |
| 16 | " | 8,067 | 21 | " | 7,806 | 28 | " | 6,911 |
| 17,5 | " | 7,908 | 23,5 | " | 7,476 | 29,5 | " | 6,844 |

Forsetzung Tabelle 8

| Vergleichsbeisp. 2 | | | Vergleichsbeisp. 3 | | | Vergleichsbeisp. 1 | | |
|---|---|---|---|---|---|---|---|---|
| T [°C] | " | log E | T [°C] | " | log E | T [°C] | " | log E |
| 18 | " | 7,954 | 24 | " | 7,534 | 29 | " | 6,871 |
| 18,5 | " | 8,016 | 26 | " | 7,256 | 31,5 | " | 6,685 |
| 21 | " | 7,666 | 27 | " | 7,229 | 32,5 | " | 6,698 |
| 21,5 | " | 7,722 | 26,5 | " | 7,289 | 32 | " | 6,733 |
| 21 | " | 7,774 | 27,5 | " | 7,297 | 34,5 | " | 6,391 |
| 23,5 | " | 7,488 | 30,5 | " | 7,011 | 35 | " | 6,604 |
| 24,5 | " | 7,452 | 30 | " | 7,072 | 35,5 | " | 6,58 |
| 25 | " | 7,498 | 30,5 | " | 7,102 | 38 | " | 6,464 |
| 24,5 | " | 7,541 | 33,5 | " | 6,79 | 38,5 | " | 6,554 |
| 26,5 | " | 7,363 | 34 | " | 6,828 | 38 | " | 6,541 |
| 27,5 | " | 7,273 | 33,5 | " | 6,873 | 40,5 | " | 6,464 |
| 28 | " | 7,312 | 34 | " | 6,897 | 41,5 | " | 6,469 |
| 28,5 | " | 7,313 | 36 | " | 6,712 | 41 | " | 6,502 |
| 30,5 | " | 7,081 | 37 | " | 6,674 | 43 | " | 6,497 |
| 31 | " | 7,115 | 36,5 | " | 6,71 | 45 | " | 6,449 |
| 30,5 | " | 7,162 | 39 | " | 6,59 | 44,5 | " | 6,432 |
| 33 | " | 6,988 | 47,5 | " | 6,299 | 45 | " | 6,462 |
| 34,5 | " | 6,971 | 50,5 | " | 6,309 | 47,5 | " | 6,432 |
| 34 | " | 7,013 | 51 | " | 6,309 | 48,5 | " | 6,452 |
| 37 | " | 6,85 | 54,5 | " | 6,299 | 48 | " | 6,417 |
| 38 | " | 6,831 | 55 | " | 6,389 | 51,5 | " | 6,339 |
| 37,5 | " | 6,86 | 58 | " | 6,29 | 52 | " | 6,42 |
| 38,5 | " | 6,795 | 57,5 | " | 6,374 | 51 | " | 6,368 |
| 40,5 | " | 6,767 | 58,5 | " | 6,425 | 54 | " | 6,421 |
| 41 | " | 6,776 | | | | 55 | " | 6,466 |
| 40,5 | " | 6,773 | | | | 54,5 | " | 6,393 |
| 42,5 | " | 6,744 | | | | 55 | " | 6,419 |
| 44 | " | 6,712 | | | | 57 | " | 6,388 |
| 44,5 | " | 6,716 | | | | 58 | " | 6,394 |
| 44 | " | 6,714 | | | | 57,5 | " | 6,382 |
| 46 | " | 6,681 | | | | 58,5 | " | 6,453 |
| 47,5 | " | 6,688 | | | | | | |
| 47 | " | 6,668 | | | | | | |
| 48 | " | 6,693 | | | | | | |
| 50,5 | " | 6,657 | | | | | | |
| 51 | " | 6,66 | | | | | | |
| 50,5 | " | 6,641 | | | | | | |
| 52 | " | 6,68 | | | | | | |
| 54 | " | 6,646 | | | | | | |
| 54,5 | " | 6,633 | | | | | | |
| 53,5 | " | 6,637 | | | | | | |
| 55,5 | " | 6,672 | | | | | | |
| 57,5 | " | 6,644 | | | | | | |
| 58 | " | 6,636 | | | | | | |
| 57 | " | 6,651 | | | | | | |
| 58,5 | " | 6,676 | | | | | | |
| 60,5 | " | 6,648 | | | | | | |

**Patentansprüche**

**Patentansprüche für folgende Vertragsstaaten : AT, BE, CH, DE, DK, FR, GB, IT, LI, NL, SE**

1. Strahlenhärtbare Oligomere mit mehreren ethylenisch ungesättigten Endgruppen und mehreren Urethan- und/oder Harnstoffgruppen pro Molekül, die herstellbar sind aus

   a) mindestens einer hydroxi- und/oder aminofunktionellen Verbindung mit einer Funktionalität zwischen 3 und 4 und mit einem zahlenmittleren Molekulargewicht von mehr als 750 bis 4000, wobei Polyesterpolyole ausgenommen sind,

   b) mindestens einer Verbindung mit zwei Hydroxyl- und/oder Aminogruppen pro Molekül und mit einem zahlenmittleren Molekulargewicht zwischen 200 und 4000, wobei Polyesterdiole ausgenommen sind,

   c) mindestens einer monoethylenisch ungesättigten Verbindung mit einer Gruppe mit einem aktiven Wasserstoffatom pro Molekül und mit einem zahlenmittleren Molekulargewicht zwischen 116 und 1000 und

   d) mindestens einem aliphatischen und/oder cycloaliphatischen Diisocyanat,

   dadurch gekennzeichnet, daß die Komponenten a bis d in solchen Mengen eingesetzt werden, daß

   1) das Molverhältnis der Komponente a zu der Komponente b zwischen 0,1 : 1 und 1,1 : 1 liegt,

   2) das Molverhältnis der Komponente c zu der Komponente a zwischen 2 : 1 und 10 : 1 liegt und

   3) das Äquivalentverhältnis der Isocyanatgruppen der Komponente d zu den Hydroxyl- und/-oder Aminogruppen der Summe der Komponenten a bis c zwischen 0,9 und 1,0 liegt.

2. Strahlenhärtbare Oligomere nach Anspruch 1, dadurch gekennzeichnet, daß als Komponente a Verbindungen mit einer Funktionalität von 3 eingesetzt worden sind.

3. Strahlenhärtbare Oligomere nach Anspruch 1 oder 2, dadurch gekennzeichnet, daß als Komponente a Verbindungen mit einem zahlenmittleren Molekulargewicht von mehr als 750 bis 2000 und/oder als Komponente b Verbindungen mit einem zahlenmittleren Molekulargewicht zwischen 600 und 2000 und/oder als Komponente c Verbindungen mit einem zahlenmittleren Molekulargewicht zwischen 116 und 400 eingesetzt worden sind.

4. Strahlenhärtbare Oligomere nach einem der Ansprüche 1 bis 3, dadurch gekennzeichnet, daß die Komponenten a bis d in solchen Mengen eingesetzt worden sind, daß

   1) das Molverhältnis der Komponente a zu der Komponente b zwischen 0,1 und 0,8 liegt und/oder

   2) das Molverhältnis der Komponente c zu der Komponente a zwischen 2,5 und 10 liegt.

5. Strahlenhärtbare Oligomere nach Anspruch 4, dadurch gekennzeichnet, daß das Oligomer einen Gehalt von 0,45 bis 0,63 mol/kg Acrylgruppen aufweist.

6. Strahlenhärtbare Oligomere nach einem der Ansprüche 1 bis 5, dadurch gekennzeichnet, daß als Komponente a ein ethoxiliertes Triol mit einem zahlenmittleren Molekulargewicht > 1000 eingesetzt worden ist.

7. Strahlenhärtbare Oligomere nach einem der Ansprüche 1 bis 6, dadurch gekennzeichnet, daß als Komponente b eine Mischung aus

   $b_1$) 0 bis 90 Mol-% eines Polyetherdiols und

   $b_2$) 100 bis 10 Mol-% eines modifizierten Polyetherdiols aus

   $b_{21}$) mindestens einem Polyetherdiol

   $b_{22}$) mindestens einer aliphatischen und/oder cycloaliphatischen Dicarbonsäure

   $b_{23}$) mindestens einer aliphatischen, gesättigten Verbindung mit einer Epoxidgruppe und mit 8 bis 21 C-Atomen pro Molekül

   eingesetzt worden ist, wobei sowohl die Summe der Anteile der Komponenten $b_1$ und $b_2$ als auch die Summe der Anteile der Komponenten $b_{21}$ bis $b_{23}$ jeweils 100 Mol-% beträgt.

8. Strahlenhärtbare Oligomere nach einem der Ansprüche 1 bis 7, dadurch gekennzeichnet, daß sie hergestellt worden sind, indem

   1) die Polyaddition der Komponenten a bis d bis zu einem Umsatz von mehr als 85 % der NCO-Gruppen durchgeführt wurde, wobei die Komponenten a bis d in solchen Mengen eingesetzt worden sind, daS das Äquivalentverhältnis der Isocyanatgruppen der Komponente a zu den Hydroxyl-und/oder Aminogruppen der Komponenten a bis c 1:1 beträgt und
2) die Polyaddition der Komponenten a bis d unter Zusatz weiterer Komponente c bis zu einem Umsatz von mehr als 99 % der NCO-Gruppen fortgeführt worden ist.

**9.** Strahlenhärtbare Überzugsmasse, dadurch gekennzeichnet, daß sie mindestens ein strahlenhärtbares Oligomer nach einem der Ansprüche 1 bis 8 enthält.

**10.** Strahlenhärtbare Überzugsmasse nach Anspruch 9, insbesondere für die Pufferbeschichtung von optischen Glasfasern, dadurch gekennzeichnet, daß sie
A) 10 bis 78 Gew.-% mindestens eines strahlenhärtbaren Oligomers nach einem der Ansprüche 1 bis 8,
B) 0 bis 60 Gew.-% mindestens eines weiteren ethylenisch ungesättigten Oligomers,
C) 20 bis 50 Gew.-% mindestens einer ethylenisch ungesättigten monomeren Verbindung,
D) 2 bis 8 Gew.-% mindestens eines Photoinitiators und
E) 0 bis 4 Gew.-% üblicher Hilfs- und Zusatzstoffe
enthält, wobei die Gew.-%-Angaben jeweils auf das Gesamtgewicht der Überzugsmasse bezogen sind.

**11.** Strahlenhärtbare Überzugsmasse nach Anspruch 9, dadurch gekennzeichnet, daß sie
A) mindestens 15 Gew.-% mindestens eines strahlenhärtbaren Oligomers nach einem der Ansprüche 1 bis 8,
B) 0 bis 50 Gew.-% mindestens eines weiteren ethylenisch ungesättigten Oligomers,
C) 22 bis 35 Gew.-% mindestens einer ethylenisch ungesättigten monomeren Verbindung,
D) 3 bis 5 Gew.-% mindestens eines Photoinitiators und
E) 0,5 bis 2,0 Gew.-% üblicher Hilfs- und Zusatzstoffe
enthält, wobei die Gew.-%-Angaben jeweils auf das Gesamtgewicht der Überzugsmasse bezogen sind.

**12.** Strahlenhärtbare Überzugsmasse nach Anspruch 10 oder 11, dadurch gekennzeichnet, daß sie als Komponente B ein weiteres ethylenisch ungesättigtes Polyurethan enthält.

**13.** Verfahren zum Beschichten einer Glasoberfläche, insbesondere einer Glasfaser, bei dem
1) eine strahlenhärtbare Grundierung aufgebracht und mittels UV- oder Elektronenstrahlung gehärtet wird und
2) ein strahlenhärtbarer Decklack aufgebracht und mittels UV- oder Elektronenstrahlung gehärtet wird,
dadurch gekennzeichnet, daß als Grundierung und/oder Decklack eine strahlenhärtbare Überzugsmasse nach einem der Ansprüche 9 bis 12 eingesetzt wird.

**14.** Optische Glasfaser, dadurch gekennzeichnet, daß sie mit einer strahlenhärtbaren Überzugsmasse nach einem der Ansprüche 9 bis 12 beschichtet ist.

**Patentansprüche für folgenden Vertragsstaat : ES**

**1.** Verfahren zur Herstellung strahlenhärtbarer Oligomere mit mehreren ethylenisch ungesättigten Endgruppen und mehreren Urethan- und/oder Harnstoffgruppen pro Molekül, bei dem
a) mindestens eine hydroxi- und/oder aminofunktionelle Verbindung mit einer Funktionalität zwischen 3 und 4 und mit einem zahlenmittleren Molekulargewicht von mehr als 750 bis 4000, wobei Polyesterpolyole ausgenommen sind,
b) mindestens eine Verbindung mit zwei Hydroxyl- und/oder Aminogruppen pro Molekül und mit einem zahlenmittleren Molekulargewicht zwischen 200 und 4000, wobei Polyesterdiole ausgenommen sind,
c) mindestens eine monoethylenisch ungesättigte Verbindung mit einer Gruppe mit einem aktiven Wasserstoffatom pro Molekül und mit einem zahlenmittleren Molekulargewicht zwischen 116 und 1000 und
d) mindestens ein aliphatisches und/oder cycloaliphatischen Diisocyanat,
umgesetzt werden, dadurch gekennzeichnet, daß die Komponenten a bis d in solchen Mengen eingesetzt werden, daß
1) das Molverhältnis der Komponente a zu der Komponente b zwischen 0,1 : 1 und 1,1 : 1 liegt,
2) das Molverhältnis der Komponente c zu der Komponente a zwischen 2 : 1 und 10 : 1 liegt und

3) das Äquivalentverhältnis der Isocyanatgruppen der Komponente d zu den Hydroxyl- und/-oder Aminogruppen der Summe der Komponenten a bis c zwischen 0,9 und 1,0 liegt.

2. Verfahren nach Anspruch 1, dadurch gekennzeichnet, daß als Komponente a Verbindungen mit einer Funktionalität von 3 eingesetzt werden.

3. Verfahren nach Anspruch 1 oder 2, dadurch gekennzeichnet, daß als Komponente a Verbindungen mit einem zahlenmittleren Molekulargewicht von mehr als 750 bis 2000 und/oder als Komponente b Verbindungen mit einem zahlenmittleren Molekulargewicht zwischen 600 und 2000 und/oder als Komponente c Verbindungen mit einem zahlenmittleren Molekulargewicht zwischen 116 und 400 eingesetzt werden.

4. Verfahren nach einem der Ansprüche 1 bis 3, dadurch gekennzeichnet, daß die Komponenten a bis d in solchen Mengen eingesetzt werden, daß
1) das Molverhältnis der Komponente a zu der Komponente b zwischen 0,1 und 0,8 liegt und/oder
2) das Molverhältnis der Komponente c zu der Komponente a zwischen 2,5 und 10 liegt.

5. Verfahren nach Anspruch 4, dadurch gekennzeichnet, daß das Oligomer einen Gehalt von 0,45 bis 0,63 mol/kg Acrylgruppen aufweist.

6. Verfahren nach einem der Ansprüche 1 bis 5, dadurch gekennzeichnet, daß als Komponente a ein ethoxiliertes Triol mit einem zahlenmittleren Molekulargewicht > 1000 eingesetzt werden.

7. Verfahren nach einem der Ansprüche 1 bis 6, dadurch gekennzeichnet, daß als Komponente b eine Mischung aus
$b_1$) 0 bis 90 Mol-% eines Polyetherdiols und
$b_2$) 100 bis 10 Mol-% eines modifizierten Polyetherdiols aus
$b_{21}$) mindestens einem Polyetherdiol
$b_{22}$) mindestens einer aliphatischen und/oder cycloaliphatischen Dicarbonsäure
$b_{23}$) mindestens einer aliphatischen, gesättigten Verbindung mit einer Epoxidgruppe und mit 8 bis 21 C-Atomen pro Molekül
eingesetzt wird, wobei sowohl die Summe der Anteile der Komponenten $b_1$ und $b_2$ als auch die Summe der Anteile der Komponenten $b_{21}$ bis $b_{23}$ jeweils 100 Mol-% beträgt.

8. Verfahren nach einem der Ansprüche 1 bis 7, dadurch gekennzeichnet, daß die strahlenhärtbaren Oligomere hergestellt werden, indem
1) die Polyaddition der Komponenten a bis d bis zu einem Umsatz von mehr als 85 % der NCO-Gruppen durchgeführt wird, wobei die Komponenten a bis d in solchen Mengen eingesetzt werden, daß das Äquivalentverhältnis der Isocyanatgruppen der Komponente a zu den Hydroxyl-und/oder Aminogruppen der Komponenten a bis c 1:1 beträgt und
2) die Polyaddition der Komponenten a bis d unter Zusatz weiterer Komponente c bis zu einem Umsatz von mehr als 99 % der NCO-Gruppen fortgeführt wird.

9. Verfahren zur Herstellung strahlenhärtbarer Überzugsmassen, dadurch gekennzeichnet, daß die Überzugsmasse mindestens ein strahlenhärtbares Oligomer nach einem der Ansprüche 1 bis 8 enthält.

10. Verfahren zur Herstellung strahlenhärtbarer Überzugsmassen, insbesondere für die Pufferbeschichtung von optischen Glasfasern nach Anspruch 9, dadurch gekennzeichnet, daß die Überzugsmasse
A) 10 bis 78 Gew.-% mindestens eines strahlenhärtbaren Oligomers, das nach einem Verfahren nach einem der Ansprüche 1 bis 8 hergestellt worden ist,
B) 0 bis 60 Gew.-% mindestens eines weiteren ethylenisch ungesättigten Oligomers,
C) 20 bis 50 Gew.-% mindestens einer ethylenisch ungesättigten monomeren Verbindung,
D) 2 bis 8 Gew.-% mindestens eines Photoinitiators und
E) 0 bis 4 Gew.-% üblicher Hilfs- und Zusatzstoffe
enthält, wobei die Gew.-%-Angaben jeweils auf das Gesamtgewicht der Überzugsmasse bezogen sind.

11. Verfahren nach Anspruch 9, dadurch gekennzeichnet, daß die Überzugsmasse

EP 0 545 969 B1

A) 15 bis 75 Gew.-% mindestens eines strahlenhärtbaren Oligomers, das nach einem Verfahren nach einem der Ansprüche 1 bis 8 hergestellt worden ist,

B) 0 bis 50 Gew.-% mindestens eines weiteren ethylenisch ungesättigten Oligomers,

C) 22 bis 35 Gew.-% mindestens einer ethylenisch ungesättigten monomeren Verbindung,

D) 3 bis 5 Gew.-% mindestens eines Photoinitiators und

E) 0,5 bis 2,0 Gew.-% üblicher Hilfs- und Zusatzstoffe

enthält, wobei die Gew.-%-Angaben jeweils auf das Gesamtgewicht der Überzugsmasse bezogen sind.

12. Verfahren nach Anspruch 10 oder 11, dadurch gekennzeichnet, daß die Überzugsmasse als Komponente B ein weiteres ethylenisch ungesättigtes Polyurethan enthält.

13. Verfahren zum Beschichten einer Glasoberfläche, insbesondere einer Glasfaser, bei dem

1) eine strahlenhärtbare Grundierung aufgebracht und mittels UV- oder Elektronenstrahlung gehärtet wird und

2) ein strahlenhärtbarer Decklack aufgebracht und mittels UV- oder Elektronenstrahlung gehärtet wird,

dadurch gekennzeichnet, daß als Grundierung und/oder Decklack eine strahlenhärtbare Überzugsmasse, die nach einem Verfahren der Ansprüche 9 bis 12 hergestellt wurde, eingesetzt wird.

Claims

Claims for the following Contracting States : AT, BE, CH, DE, DK, FR, GB, IT, LI, NL, SE

1. Radiation-curable oligomers having a plurality of ethylenically unsaturated end groups and a plurality of urethane and/or urea groups per molecule, which oligomers can be prepared from

a) at least one hydroxy- and/or aminofunctional compound having a functionality between 3 and 4 and a number-average molecular weight of more than 750 to 4000, polyesterpolyols being excepted,

b) at least one compound having 2 hydroxyl and/or amino groups per molecule and a number-average molecular weight between 200 and 4000, polyesterdiols being excepted,

c) at least one monoethylenically unsaturated compound having a group containing one active hydrogen atom per molecule and having a number-average molecular weight between 116 and 1000, and

d) at least one aliphatic and/or cycloaliphatic diisocyanate,

characterized in that components a to d are used in amounts such that

1) the molar ratio of component a to component b is between 0.1 : 1 and 1.1 : 1,

2) the molar ratio of component c to component a is between 2 : 1 and 10 : 1, and

3) the equivalent ratio of the isocyanate groups of component d to the hydroxyl and/or amino groups of the sum of components a to c is between 0.9 and 1.0.

2. Radiation-curable oligomers according to Claim 1, characterized in that compounds having a functionality of 3 have been used as component a.

3. Radiation-curable oligomers according to Claim 1 or 2, characterized in that compounds having a number-average molecular weight of more than 750 to 2000 have been used as component a and/or compounds having a number-average molecular weight between 600 and 2000 as component b and/or compounds having a number-average molecular weight between 116 and 400 as component c.

4. Radiation-curable oligomers according to one of Claims 1 to 3, characterized in that components a to d have been used in amounts such that

1) the molar ratio of component a to component b is between 0.1 and 0.8 and/or

2) the molar ratio of component c to component a is between 2.5 and 10.

5. Radiation-curable oligomers according to Claim 4, characterized in that the oligomer has an acrylic group content of 0.45 to 0.63 mol/kg.

6. Radiation-curable oligomers according to one of Claims 1 to 5, characterized in that an ethoxylated triol having a number-average molecular weight of > 1000 has been used as component a.

26

7. Radiation-curable oligomers according to one of Claims 1 to 6, characterized in that a mixture comprising

$b_1$) 0 to 90 mol % of a polyetherdiol and

$b_2$) 100 to 10 mol % of a modified polyetherdiol composed of

$b_{21}$) at least one polyetherdiol

$b_{22}$) at least one aliphatic and/or cycloaliphatic dicarboxylic acid and

$b_{23}$) at least one aliphatic, saturated compound having an epoxy group and 8 to 21 C atoms per molecule,

in which the sum of the amounts of components $b_1$ and $b_2$ and the sum of the amounts of components $b_{21}$ to $b_{23}$ is in each case 100 mol %, has been used as component b.

8. Radiation-curable oligomers according to one of Claims 1 to 7, which have been prepared by

1) carrying out the polyaddition reaction of components a to d up to a conversion of more than 85 % of the NCO groups, in which components a to d have been used in amounts such that the equivalent ratio of the isocyanate groups of component a to the hydroxyl and/or amino groups of components a to c is 1 : 1 and

2) the polyaddition reaction of components a to d has been continued with addition of more of component c up to a conversion of more than 99 % of the NCO groups.

9. Radiation-curable coating composition, which contains at least one radiation-curable oligomer according to one of Claims 1 to 8.

10. Radiation-curable coating composition according to Claim 9, in particular for the buffer coating of optical glass fibres, which contains

A) 10 to 78 % of at least one radiation-curable oligomer according to one of Claims 1 to 8,

B) 0 to 60 % by weight of at least one further ethylenically unsaturated oligomer,

C) 20 to 50 % by weight of at least one ethylenically unsaturated monomeric compound,

D) 2 to 8 % by weight of at least one photoinitiator and

E) 0 to 4 % by weight of conventional auxiliaries and additives,

the % by weight given being in each case relative to the total weight of the coating composition.

11. Radiation-curable coating composition according to Claim 9, which contains

A) at least 15 % of at least one radiation-curable oligomer according to one of Claims 1 to 8,

B) 0 to 50 % by weight of at least one further ethylenically unsaturated oligomer,

C) 22 to 35 % by weight of at least one ethylenically unsaturated monomeric compound,

D) 3 to 5 % by weight of at least one photoinitiator and

E) 0.5 to 2.0 % by weight of conventional auxiliaries and additives,

the % by weight given being in each case relative to the total weight of the coating composition.

12. Radiation-curable coating composition according to Claim 10 or 11, which contains a further ethylenically unsaturated polyurethane as component B.

13. Process for the coating of a glass surface, in particular a glass fibre, in which

1) a radiation-curable primer is applied and cured by means of UV or electron radiation and

2) a radiation-curable top coat is applied and cured by means of UV or electron radiation,

characterized in that a radiation-curable coating composition according to one of Claims 9 to 12 is used as primer and/or topcoat.

14. Optical glass fibre coated with a radiation-curable coating composition according to one of Claims 9 to 12.

**Claims for the following Contracting State : ES**

1. Process for the preparation of radiation-curable oligomers having a plurality of ethylenically unsaturated end groups and a plurality of urethane and/or urea groups per molecule, in which process

a) at least one hydroxy- and/or aminofunctional compound having a functionality between 3 and 4 and a number-average molecular weight of more than 750 to 4000, polyesterpolyols being excepted,

EP 0 545 969 B1

b) at least one compound having 2 hydroxyl and/or amino groups per molecule and a number-average molecular weight between 200 and 4000, polyesterdiols being excepted,

c) at least one monoethylenically unsaturated compound having a group containing one active hydrogen atom per molecule and having a number-average molecular weight between 116 and 1000, and

d) at least one aliphatic and/or cycloaliphatic diisocyanate,

are reacted, characterized in that components a to d are used in amounts such that

1) the molar ratio of component a to component b is between 0.1 : 1 and 1.1 : 1,

2) the molar ratio of component c to component a is between 2 : 1 and 10 : 1, and

3) the equivalent ratio of the isocyanate groups of component d to the hydroxyl and/or amino groups of the sum of components a to c is between 0.9 and 1.0.

2. Process according to Claim 1, characterized in that compounds having a functionality of 3 are used as component a.

3. Process according to Claim 1 or 2, characterized in that compounds having a number-average molecular weight of more than 750 to 2000 are used as component a and/or compounds having a number-average molecular weight between 600 and 2000 as component b and/or compounds having a number-average molecular weight between 116 and 400 as component c.

4. Process according to one of Claims 1 to 3, characterized in that components a to d are used in amounts such that

1) the molar ratio of component a to component b is between 0.1 and 0.8 and/or

2) the molar ratio of component c to component a is between 2.5 and 10.

5. Process according to Claim 4, characterized in that the oligomer has an acrylic group content of 0.45 to 0.63 mol/kg.

6. Process according to one of Claims 1 to 5, characterized in that an ethoxylated triol having a number-average molecular weight of > 1000 are [sic] used as component a.

7. Process according to one of Claims 1 to 6, characterized in that a mixture comprising

$b_1$) 0 to 90 mol % of a polyetherdiol and

$b_2$) 100 to 10 mol % of a modified polyetherdiol composed of

$b_{21}$) at least one polyetherdiol

$b_{22}$) at least one aliphatic and/or cycloaliphatic dicarboxylic acid and

$b_{23}$) at least one aliphatic, saturated compound having an epoxy group and 8 to 21 C atoms per molecule,

in which the sum of the amounts of components $b_1$ and $b_2$ and the sum of the amounts of components $b_{21}$ to $b_{23}$ is in each case 100 mol %, is used as component b.

8. Process according to one of Claims 1 to 7, characterized in that the radiation-curable oligomers are prepared by

1) carrying out the polyaddition reaction of components a to d up to a conversion of more than 85 % of the NCO groups, in which components a to d are used in amounts such that the equivalent ratio of the isocyanate groups of component a to the hydroxyl and/or amino groups of components a to c is 1:1 and

2) the polyaddition reaction of components a to d is continued with addition of more of component c up to a conversion of more than 99 % of the NCO groups.

9. Process for the preparation of radiation-curable coating compositions, characterized in that the coating composition contains at least one radiation-curable oligomer according to one of Claims 1 to 8.

10. Process for the preparation of radiation-curable coating compositions, in particular for the buffer coating of optical glass fibres according to Claim 9, characterized in that the coating composition contains

A) 10 to 78 % of at least one radiation-curable oligomer prepared by a process according to one of Claims 1 to 8,

B) 0 to 60 % by weight of at least one further ethylenically unsaturated oligomer,

28

C) 20 to 50 % by weight of at least one ethylenically unsaturated monomeric compound,

D) 2 to 8 % by weight of at least one photoinitiator and

E) 0 to 4 % by weight of conventional auxiliaries and additives,

the % by weight given being in each case relative to the total weight of the coating composition.

**11.** Process according to Claim 9, characterized in that the coating composition contains

A) 15 to 75 % of at least one radiation-curable oligomer prepared by a process according to one of Claims 1 to 8,

B) 0 to 50 % by weight of at least one further ethylenically unsaturated oligomer,

C) 22 to 35 % by weight of at least one ethylenically unsaturated monomeric compound,

D) 3 to 5 % by weight of at least one photoinitiator and

E) 0.5 to 2.0 % by weight of conventional auxiliaries and additives,

the % by weight given being in each case relative to the total weight of the coating composition.

**12.** Process according to Claim 10 or 11, characterized in that the coating composition contains a further ethylenically unsaturated polyurethane as component B.

**13.** Process for the coating of a glass surface, in particular a glass fibre, in which

1) a radiation-curable primer is applied and cured by means of UV or electron radiation and

2) a radiation-curable top coat is applied and cured by means of UV or electron radiation,

characterized in that a radiation-curable coating composition prepared by a process of Claims 9 to 12 is used as primer and/or topcoat.

**Revendications**

**Revendications pour les Etats contractants suivants : AT, BE, CH, DE, DK, FR, GB, IT, LI, NL, SE**

**1.** Oligomères durcissables par irradiation ayant plusieurs groupements terminaux éthyléniquement insaturés et plusieurs groupements uréthane et/ou urée par molécule, que l'on peut préparer à partir

a) d'au moins un composé hydroxyfonctionnel et/ou aminofonctionnel ayant une fonctionnalité comprise entre 3 et 4 et ayant un poids moléculaire moyen au nombre de plus de 750 à 4 000, à l'exception des polyesterpolyols,

b) d'au moins un composé ayant deux groupements hydroxyles et/ou amino par molécule et ayant un poids moléculaire moyen au nombre compris entre 200 et 4 000, à l'exception des polyesterdiols,

c) d'au moins un composé monoéthyléniquement insaturé avec un groupement ayant un atome d'hydrogène actif par molécule et ayant un poids moléculaire moyen au nombre compris entre 116 et 1 000 et

d) d'au moins un diisocyanate aliphatique et/ou cycloaliphatique,

caractérisés en ce que l'on utilise les composants a à d dans des quantités telles que

1) le rapport molaire du composant a au composant b se situe entre 0,1 : 1 et 1,1 : 1,

2) le rapport molaire du composant c au composant a se situe entre 2 : 1 et 10 : 1 et

3) le rapport d'équivalence des groupements isocyanates du composant d aux groupements hydroxyles et/ou amino de la somme des composants a à c se situe entre 0,9 et 1,0.

**2.** Oligomères durcissables par irradiation selon la revendication 1, caractérisés en ce que l'on a utilisé en tant que composant a des composés ayant une fonctionnalité de 3.

**3.** Oligomères durcissables par irradiation selon la revendication 1 ou 2, caractérisés en ce que l'on a utilisé en tant que composant a des composés ayant un poids moléculaire moyen au nombre de plus de 750 à 2 000 et/ou en tant que composant b des composés ayant un poids moléculaire moyen au nombre compris entre 600 et 2 000 et/ou en tant que composant c des composés ayant un poids moléculaire moyen au nombre compris entre 116 et 400.

**4.** Oligomères durcissables par irradiation selon l'une quelconque des revendications 1 à 3, caractérisés en ce que l'on a utilisé les composants a à d dans des quantités telles que

1) le rapport molaire du composant a au composant b se situe entre 0,1 et 0,8 et/ou

2) le rapport molaire du composant c au composant a se situe entre 2,5 et 10.

5. Oligomères durcissables par irradiation selon la revendication 4, caractérisés en ce que l'oligomère présente une teneur en groupements acryliques de 0,45 à 0,63 mole/kg.

6. Oligomères durcissables par irradiation selon l'une quelconque des revendications 1 à 5, caractérisés en ce que l'on a utilisé en tant que composant a un triol éthoxylé ayant un poids moléculaire moyen au nombre > 1 000.

7. Oligomères durcissables par irradiation selon l'une quelconque des revendications 1 à 6, caractérisés en ce que l'on a utilisé en tant que composant b un mélange

   $b_1$) de 0 à 90 % en moles d'un polyétherdiol et
   $b_2$) de 100 à 10 % en moles d'un polyétherdiol modifié obtenu à partir
      $b_{21}$) d'au moins un polyétherdiol
      $b_{22}$) d'au moins un acide dicarboxylique aliphatique et/ou cycloaliphatique
      $b_{23}$) d'au moins un composé saturé aliphatique ayant un groupement époxyde et de 8 à 21 atomes de C par molécule

   la somme des proportions des composants $b_1$ et $b_2$ ainsi que la somme des proportions des composants $b_{21}$ à $b_{23}$ étant à chaque fois de 100 % en moles.

8. Oligomères durcissables par irradiation selon l'une quelconque des revendications 1 à 7, caractérisés en ce qu'ils ont été préparés en ce que

   1) l'on a effectué la polyaddition des composants a à d jusqu'à un rendement de plus de 85 % des groupements NCO, les composants a à d ayant été utilisés dans des quantités telles que le rapport d'équivalence des groupements isocyanates du composant a aux groupements hydroxyles et/ou amino des composants a à c est de 1 : 1 et que

   2) l'on a poursuivi la polyaddition des composants a à d sous addition de composant supplémentaire c jusqu'à un rendement de plus de 99 % des groupements NCO.

9. Masse de revêtement durcissable par irradiation, caractérisée en ce qu'elle contient au moins un oligomère durcissable par irradiation selon l'une quelconque des revendications 1 à 8.

10. Masse de revêtement durcissable par irradiation selon la revendication 9, en particulier pour le revêtement tampon de fibres optiques de verre, caractérisée en ce qu'elle contient

    A) de 10 à 78 % en poids d'au moins un oligomère durcissable par irradiation selon l'une quelconque des revendications 1 à 8,
    B) de 0 à 60 % en poids d'au moins un oligomère supplémentaire éthyléniquement insaturé,
    C) de 20 à 50 % en poids d'au moins un composé monomère éthyléniquement insaturé,
    D) de 2 à 8 % en poids d'au moins un agent de photoinitiation et
    E) de 0 à 4 % en poids d'additifs et d'adjuvants usuels,
    les indications de % en poids se rapportant à chaque fois au poids total de la masse de revêtement.

11. Masse de revêtement durcissable par irradiation selon la revendication 9, caractérisée en ce qu'elle contient

    A) au moins 15 % en poids d'au moins un oligomère durcissable par irradiation selon l'une quelconque des revendications 1 à 8,
    B) de 0 à 50 % en poids d'au moins un oligomère supplémentaire éthyléniquement insaturé,
    C) de 22 à 35 % en poids d'au moins un composé monomère éthyléniquement insaturé,
    D) de 3 à 5 % en poids d'au moins un agent de photoinitiation et
    E) de 0,5 à 2,0 % en poids d'additifs et d'adjuvants usuels,
    les indications de % en poids se rapportant à chaque fois au poids total de la masse de revêtement.

12. Masse de revêtement durcissable par irradiation selon la revendication 10 ou 11, caractérisée en ce qu'elle contient en tant que composant B un polyuréthane éthyléniquement insaturé supplémentaire.

13. Procédé de revêtement d'une surface de verre, en particulier d'une fibre de verre, lors duquel

    1) on applique une couche de fond durcissable par irradiation et on procède à son durcissement à l'aide de radiation ultraviolette ou de radiation par faisceau électronique et

    2) on applique une laque de finition durcissable par irradiation et on procède à son durcissement à l'aide de radiation ultraviolette ou de radiation par faisceau électronique,

caractérisé en ce que l'on utilise en tant que couche de fond et/ou laque de finition une masse de revêtement durcissable par irradiation selon l'une quelconque des revendications 9 à 12.

**14.** Fibre optique de verre, caractérisée en ce qu'elle est revêtue à l'aide d'une masse de revêtement durcissable par irradiation selon l'une quelconque des revendications 9 à 12.

**Revendications pour l'Etat contractant suivant : ES**

**1.** Procédé de préparation d'oligomères durcissables par irradiation ayant plusieurs groupements terminaux éthyléniquement insaturés et plusieurs groupements uréthane et/ou urée par molécule, lors duquel on fait réagir

a) au moins un composé hydroxyfonctionnel et/ou aminofonctionnel ayant une fonctionnalité comprise entre 3 et 4 et ayant un poids moléculaire moyen au nombre de plus de 750 à 4 000, à l'exception des polyesterpolyols,

b) au moins un composé ayant deux groupements hydroxyles et/ou amino par molécule et ayant un poids moléculaire moyen au nombre compris entre 200 et 4 000, à l'exception des polyesterdiols,

c) au moins un composé monoéthyléniquement insaturé avec un groupement ayant un atome d'hydrogène actif par molécule et ayant un poids moléculaire moyen au nombre compris entre 116 et 1 000 et

d) au moins un diisocyanate aliphatique et/ou cycloaliphatique,

caractérisé en ce que l'on utilise les composants a à d dans des quantités telles que

1) le rapport molaire du composant a au composant b se situe entre 0,1 : 1 et 1,1 : 1,

2) le rapport molaire du composant c au composant a se situe entre 2 : 1 et 10 : 1 et

3) le rapport d'équivalence des groupements isocyanates du composant d aux groupements hydroxyles et/ou amino de la somme des composants a à c se situe entre 0,9 et 1,0.

**2.** Procédé selon la revendication 1, caractérisé en ce que l'on utilise en tant que composant a des composés ayant une fonctionnalité de 3.

**3.** Procédé selon la revendication 1 ou 2, caractérisé en ce que l'on utilise en tant que composant a des composés ayant un poids moléculaire moyen au nombre de plus de 750 à 2 000 et/ou en tant que composant b des composés ayant un poids moléculaire moyen au nombre compris entre 600 et 2 000 et/ou en tant que composant c des composés ayant un poids moléculaire moyen au nombre compris entre 116 et 400.

**4.** Procédé selon l'une quelconque des revendications 1 à 3, caractérisé en ce que l'on utilise les composants a à d dans des quantités telles que

1) le rapport molaire du composant a au composant b se situe entre 0,1 et 0,8 et/ou

2) le rapport molaire du composant c au composant a se situe entre 2,5 et 10.

**5.** Procédé selon la revendication 4, caractérisé en ce que l'oligomère présente une teneur en groupements acryliques de 0,45 à 0,63 mole/kg.

**6.** Procédé selon l'une quelconque des revendications 1 à 5, caractérisé en ce que l'on utilise en tant que composant a un triol éthoxylé ayant un poids moléculaire moyen au nombre > 1 000.

**7.** Procédé selon l'une quelconque des revendications 1 à 6, caractérisé en ce que l'on utilise en tant que composant b un mélange

$b_1$) de 0 à 90 % en moles d'un polyétherdiol et

$b_2$) de 100 à 10 % en moles d'un polyétherdiol modifié obtenu à partir

$b_{21}$) d'au moins un polyétherdiol

$b_{22}$) d'au moins un acide dicarboxylique aliphatique et/ou cycloaliphatique

$b_{23}$) d'au moins un composé saturé aliphatique ayant un groupement époxyde et de 8 à 21 atomes de C par molécule,

la somme des proportions des composants $b_1$ et $b_2$ ainsi que la somme des proportions des composants $b_{21}$ à $b_{23}$ étant à chaque fois de 100 % en moles.

**8.** Procédé selon l'une quelconque des revendications 1 à 7, caractérisé en ce que les oligomères durcissables par irradiation sont préparés en ce que

1) l'on effectue la polyaddition des composants a à d jusqu'à un rendement de plus de 85 % des groupements NCO, les composants a à d étant utilisés dans des quantités telles que le rapport d'équivalence des groupements isocyanates du composant a aux groupements hydroxyles et/ou amino des composants a à c est de 1 : 1 et que

2) l'on poursuit la polyaddition des composants a à d sous addition de composant supplémentaire c jusqu'à un rendement de plus de 99 % des groupements NCO.

**9.** Procédé de préparation de masses de revêtement durcissables par irradiation, caractérisé en ce que la masse de revêtement contient au moins un oligomère durcissable par irradiation selon l'une quelconque des revendications 1 à 8.

**10.** Procédé de préparation de masses de revêtement durcissables par irradiation, en particulier pour le revêtement tampon de libres optiques de verre selon la revendication 9, caractérisé en ce que la masse de revêtement contient

A) de 10 à 78 % en poids d'au moins un oligomère durcissable par irradiation qui a été préparé conformément à un procédé selon l'une quelconque des revendications 1 à 8,

B) de 0 à 60 % en poids d'au moins un oligomère supplémentaire éthyléniquement insaturé,

C) de 20 à 50 % en poids d'au moins un composé monomère éthyléniquement insaturé,

D) de 2 à 8 % en poids d'au moins un agent de photoinitiation et

E) de 0 à 4 % en poids d'additifs et d'adjuvants usuels,

les indications de % en poids se rapportant à chaque fois au poids total de la masse de revêtement.

**11.** Procédé selon la revendication 9, caractérisé en ce que la masse de revêtement contient

A) de 15 à 75 % en poids d'au moins un oligomère durcissable par irradiation, qui a été préparé conformément à un procédé selon l'une quelconque des revendications 1 à 8,

B) de 0 à 50 % en poids d'au moins un oligomère supplémentaire éthyléniquement insaturé,

C) de 22 à 35 % en poids d'au moins un composé monomère éthyléniquement insaturé, D) de 3 à 5 % en poids d'au moins un agent de

photoinitiation et

E) de 0,5 à 2,0 % en poids d'additifs et d'adjuvants usuels,

les indications de % en poids se rapportant à chaque fois au poids total de la masse de revêtement.

**12.** Procédé selon la revendication 10 ou 11, caractérisé en ce que la masse de revêtement contient en tant que composant B un polyuréthane éthyléniquement insaturé supplémentaire.

**13.** Procédé de revêtement d'une surface de verre, en particulier d'une fibre de verre, lors duquel

1) on applique une couche de fond durcissable par irradiation et on procède à son durcissement à l'aide de radiation ultraviolette ou de radiation par faisceau électronique et

2) on applique une laque de finition durcissable par irradiation et on procède à son durcissement à l'aide de radiation ultraviolette ou de radiation par faisceau électronique,

caractérisé en ce que l'on utilise en tant que couche de fond et/ou laque de finition une masse de revêtement durcissable par irradiation, qui a été préparée conformément à un procédé quelconque des revendications 9 à 12.

Fig. 1

Fig. 2

Fig. 3

Fig. 4

EP 0 545 969 B1

36

Fig. 5

EP 0 545 969 B1

Fig. 6

EP 0 545 969 B1

Fig. 7

EP 0 545 969 B1

Fig. 8

EP 0 545 969 B1

40

Fig. 9

E-Modul [MPa]

Fig. 10

42

EP 0 545 969 B1

Vergleichsbeispiel 2

**E-Modul [MPa]**

Fig. 11

EP 0 545 969 B1

Temp [ C]

Vergleichsbeispiel 3